# EUROPÄISCHE PATENTANMELDUNG

(11) **EP 4 393 899 A1**
(43) Veröffentlichungstag der Anmeldung: **03.07.2024**
(21) Anmeldenummer: 23219337.5
(22) Anmeldetag: 21.12.2023
(51) Int. Cl.: C05F 11/00, A01G 24/22

(54) **VERFAHREN ZUM HERSTELLEN EINES ARTIKELS ZUR VERWENDUNG IM PFLANZENBAU, ARTIKEL ZUR VERWENDUNG IM PFLANZENBAU, VERWENDUNG EINES ARTIKELS ZUR VERWENDUNG IM PFLANZENBAU, ENTSPRECHENDES VORBEHANDELTES LAUB SOWIE ENTSPRECHENDES KIT**

(30) Priorität: 29.12.2022 DE 102022134999
(71) Anmelder: Green-Nature Stiftung, 9490 Vaduz (LI)
(72) Erfinder: HUSTER, Michael, 48324 Sendenhorst-Albersloh (DE); STEEN, Manfred, 21635 Jork-Königreich (DE)
(74) Vertreter: Eisenführ Speiser

(57) **Zusammenfassung**

Beschrieben wird ein Verfahren zum Herstellen eines Artikels zur Verwendung im Pflanzenbau, zumindest umfassend die Schritte:
(S1) Herstellen oder bereitstellen einer vordefinierten Menge von vorbehandeltem Laub in einem ersten Behältnis;
(S2) Herstellen oder Bereitstellen, jeweils in einer vordefinierten Menge, von einem, zwei, drei oder mehreren Stoffen als Zuschlagstoffe in zumindest einem zweiten Behältnis;
(S3) kontaktierendes Vermischen von vorbehandeltem Laub mit einem, zwei, drei oder mehreren Stoffen als Zuschlagstoffe, so dass ein Artikel zur Verwendung im Pflanzenbau resultiert.

## Beschreibung

Die vorliegende Erfindung betrifft ein Verfahren zum Herstellen eines Artikels zur Verwendung im Pflanzenbau. Weitere Details des erfindungsgemäßen Verfahrens ergeben sich aus den beigefügten Patentansprüchen sowie der nachfolgenden Beschreibung. Die vorliegende Erfindung betrifft zudem einen Artikel zur Verwendung im Pflanzenbau. Die vorliegende Erfindung betrifft auch eine Verwendung eines Artikels zur Verwendung im Pflanzenbau. Die vorliegende Erfindung betrifft darüber hinaus entsprechendes vorbehandeltes Laub. Die vorliegende Erfindung betrifft weiterhin ein entsprechendes Kit. Jeweils ergeben sich Einzelheiten aus den beigefügten Patentansprüchen und der nachfolgenden Beschreibung.

Pflanzen benötigen zum Wachstum neben anderen Faktoren zumindest Wasser, Nährstoffe, Luft und Licht. Ihr Wachstum wird auch durch weitere Umgebungsbedingungen wie Bodenart oder Substrat, Bodengefüge, pH-Wert, Temperatur und Luftfeuchtigkeit beeinflusst. Verschiedene Pflanzenarten bevorzugen oder benötigen unterschiedliche Bedingungen für ihr Wachstum; insbesondere stellen sie unterschiedliche Ansprüche an die Versorgung mit Nährstoffen und Spurenelementen sowie an die sonstige Bodenbeschaffenheit einschließlich pH-Wert.

Der Pflanzenbau betrifft den planmäßigen landwirtschaftlichen (Ackerbau) oder gartenbaulichen (Gartenbau) Anbau von Nutzpflanzen und auch Zierpflanzen.

Aus dem Stand der Technik sind Methoden bekannt um Bodenbeschaffenheiten zu optimieren und so das Pflanzenwachstum im Pflanzenbau gezielt zu beeinflussen.

Beispielsweise ist auf dem Gebiet des Pflanzenbaus der Einsatz von Kunstdüngern bekannt. Dieserwird in vielen Fällen auf dem Gebiet der vorliegenden Erfindung als nachteilig empfunden, da die Herstellung von Kunstdüngern regelmäßig nicht nachhaltig erfolgt. Zudem ist die Herstellung von Kunstdüngern regelmäßig mit dem Verbrauch großer Energiemengen verbunden. Der langfristige Einsatz von Kunstdünger ist auf dem Gebiet des Pflanzenbaus zudem häufig nicht erwünscht, da er in vielen Fällen zu einer Abnahme der Bodenqualität führt und insbesondere häufig negativen Einfluss auf Zahl, Art und/oder Vielfalt natürlich vorkommender Bodenorganismen hat. Bereits aus diesen Gründen wird der Einsatz von Kunstdünger auf dem Gebiet des Pflanzenbaus in vielen Fällen zunehmend als nachteilig empfunden.

Aus dem Stand der Technik ist auch bereits der Einsatz von kompostierten Materialien bekannt, der jedoch ebenfalls mehrere bekannte Nachteile aufweist. Insbesondere wird die schwankende Nährstoffzusammensetzung bei Komposten auf dem Gebiet des Pflanzenbaus häufig als nachteilig empfunden. Insbesondere in Fällen, in denen eine hohe Anbaueffizienz gewünscht ist, werden solche Schwankungen in der Nährstoffzusammensetzung auf dem Gebiet des Pflanzenbaus als äußerst nachteilig empfunden. Darüber hinaus weisen Komposte auch eine schwankende Konsistenz und in vielen Fällen auch einen als nachteilig wahrgenommenen Geruch auf; beides wird auf dem Gebiet des Pflanzenbaus häufig als unvorteilhaft empfunden. Speziell beim Anbau von Lebensmitteln ist der Einsatz von Komposten häufig auch aus rechtlichen und/oder hygienischen Gründen nicht möglich oder mit einem unvorteilhaft großen Aufwand verbunden.

Aus dem Stand der Technik ist es zudem bekannt, dass humushaltige Substrate für eine optimierte Nährstoffzusammensetzung mit Kunstdüngern versetzt werden. Dies wird auf dem Gebiet der vorliegenden Erfindung häufig als nachteilig empfunden, da die von Kunstdüngern bekannten Nachteile hier ebenfalls zum Tragen kommen.

Der Einsatz von Torf wird auf dem Gebiet der vorliegenden Erfindung zunehmend als nachteilig empfunden, insbesondere, da er nicht auf nachhaltige Weise zur Verfügung gestellt werden kann, sondern sein Einsatz im Pflanzenbau regelmäßig mit der Zerstörung ökologisch wertvoller Lagerstätten verbunden ist.

EP 3 369 298 B1 betrifft ein Verfahren zur Verarbeitung von Tierexkrementen, insbesondere Gülle von Schweinen, Rindern, Geflügel oder dergleichen.

Auf dem Gebiet der vorliegenden Erfindung besteht ein zunehmender Bedarf an humushaltigen Substraten, die eine, jeweils auf das spezielle Anwendungsgebiet bezogene und als vorteilhaft empfundene Nährstoffzusammensetzung besitzen. Es besteht zudem ein Bedarf an Substraten, die für den Einsatz zum Anbau von Lebensmitteln geeignet sind. Es besteht zudem ein Bedarf an Verfahren, mit denen sich Substrate mit den vorstehend genannten vorteilhaften Eigenschaften herstellen lassen, ohne dass ein Zusatz von Kunstdüngern erfolgt. Es besteht zudem ein Bedarf an Verfahren, mit denen sich Substrate mit den vorstehend genannten vorteilhaften Eigenschaften mit einem möglichst geringem Anteil an Kunstdüngern herstellen lassen.

Es besteht zudem ein Bedarf an Verfahren, mit denen nachhaltige, humushaltige Substrate für verschiedene Pflanzenarten optimiert zur Verfügung gestellt werden können.

Auf dem Gebiet der vorliegenden Erfindung besteht ein Bedarf an Verfahren um Artikel zur Verfügung zu stellen, die die vorstehend genannten Eigenschaften, vorzugsweise Eigenschaftskombinationen, aufweisen, ohne dass sie einen als nachteilig empfundenen Geruch aufweisen, sowie an entsprechenden Artikeln.

Auf dem Gebiet der vorliegenden Erfindung besteht zudem ein Bedarf an entsprechenden Artikeln, deren Humusanteil aus innerhalb von maximal 100 Jahren, bevorzugt maximal 20 Jahren, besonders bevorzugt maximal 5 Jahren, ganz besonders bevorzugt maximal einem Jahr, nachwachsenden Rohstoffen besteht sowie an entsprechenden Verfahren zu ihrer Herstellung. Auf dem Gebiet der vorliegenden Erfindung wird der Aspekt der Nachhaltigkeit entsprechender Substrate als zunehmend vorteilhaft empfunden. Nicht nachhaltig hergestellte Substrate werden in vielen Fällen als nachteilig empfunden.

Der Einsatz von Kokosfasern in Verfahren mit denen humushaltige Substrate zur Verfügung gestellt werden können bzw. der Einsatz von Kokosfasern in humushaltigen Substraten, wird in vielen Fällen, insbesondere aus ökologischen Gründen, als nachteilig empfunden.

Weitere der vorliegenden Erfindung zugrundeliegenden Aufgaben und mit der vorliegenden Erfindung verknüpfte Vorteile ergeben sich aus der nachfolgenden Beschreibung und den beigefügten Patentansprüchen.

Die Erfindung wird in den Patentansprüchen definiert. Bevorzugte Aspekte der vorliegenden Erfindung ergeben sich überdies aus der nachfolgenden Beschreibung einschließlich der Beispiele.

Soweit für einen erfindungsgemäßen Aspekt (Verfahren zum Herstellen eines Artikels zur Verwendung im Pflanzenbau, Artikel zur Verwendung im Pflanzenbau, Verwendung eines Artikels zur Verwendung im Pflanzenbau, vorbehandeltes Laub, Kit) bestimmte Ausgestaltungen als bevorzugt bezeichnet werden, gelten die entsprechenden Ausführungen auch für die anderen Aspekte der vorliegenden Erfindung, *mutatis mutandis.* Bevorzugte individuelle Merkmale erfindungsgemäßer Aspekte (wie in den Ansprüchen definiert und/oder in der Beschreibung offenbart) sind miteinander kombinierbar und werde vorzugsweise miteinander kombiniert, sofern sich im Einzelfall für den Fachmann aus dem vorliegenden Text nichts anderes ergibt.

Gemäß einem primären Aspekt der vorliegenden Erfindung werden die vorstehend angegebenen Aufgaben- und Problemstellungen ganz oder teilweise gelöst durch ein Verfahren zum Herstellen eines Artikels zur Verwendung im Pflanzenbau, zumindest umfassend die Schritte:
(S1) Herstellen oder bereitstellen einer vordefinierten Menge von vorbehandeltem Laub in einem ersten Behältnis;
(S2) Herstellen oder Bereitstellen, jeweils in einer vordefinierten Menge, von einem, zwei, drei oder mehreren Stoffen als Zuschlagstoffe in zumindest einem zweiten Behältnis;
(S3) kontaktierendes Vermischen von vorbehandeltem Laub mit einem, zwei, drei oder mehreren Stoffen als Zuschlagstoffe, so dass ein Artikel zur Verwendung im Pflanzenbau resultiert.

Das Herstellen oder Bereitstellen von Stoffen in einer vordefinierten Menge bedeutet, dass die Stoffe jeweils in einer definierten Menge gemäß einer Rezeptur hergestellt oder bereitgestellt werden. Das kontaktierende Vermischen, sodass ein Artikel zur Verwendung im Pflanzenbau resultiert in Schritt (S3), erfolgt in diesen vordefinierten Mengen gemäß einer Rezeptur.

Der Begriff "vorbehandeltes Laub" bezeichnet im Rahmen der vorliegenden Erfindung Laub, das zumindest mechanisch zerkleinert wurde. Vorzugsweise erfolgt das mechanische Zerkleinern dabei durch ein Zerreißen und nicht durch ein Schneiden. Der Begriff "vorbehandeltes Laub" umfasst im Rahmen der vorliegenden Erfindung auch die Begriffe "Laubstücke" und "konditioniertes vorbehandeltes Laub".

Die vorliegende Erfindung betrifft mit ihren diversen Aspekten insbesondere und bevorzugt auch ein Verfahren (wie vorstehend beschrieben, vorzugsweise wie vorstehend als bevorzugt bezeichnet), wobei der resultierende Artikel zur Verwendung im Pflanzenbau ein humushaltiges Substrat ist, bevorzugt eine gärtnerische Erde und/oder ein Kultursubstrat. Beispiele für humushaltige Substrate sowie für gärtnerische Erden und/oder ein Kultursubstrate sind insbesondere standardisierte Kultursubstrate, industriell erzeugte Erden, Komposterden, Mistbeeterden, Lauberden, Hobbyerden, Profierden, Pflanzenerden, Blumenerden und Spezialerden.

Im Rahmen der vorliegenden Erfindung ist es in vielen Fällen bevorzugt, dass ein humushaltiges Substrat Anteile von zerkleinertem Gestein, wie zum Beispiel Sande umfasst. In vielen Fällen ist es im Rahmen der vorliegenden Erfindung bevorzugt, wenn das humushaltige Substrat weniger als 15 Gew.-%, bevorzugt weniger als 10 Gew.-%, besonderes bevorzugt weniger als 5 Gew.-%, ganz besonders bevorzugt weniger als 3 Gew.-%, sehr besonders bevorzugt weniger als 1 Gew.-% zerkleinertes Gestein, vorzugsweise Sand, enthält. In vielen Fällen ist es besonders bevorzugt, wenn im Einklang mit §4 (4) der "Bioabfallverordnung in der Fassung der Bekanntmachung vom 4. April 2013 (BGBI. I S. 658), die zuletzt durch Artikel 1 der Verordnung vom 28. April 2022 (BGBI. I S. 700) geändert worden ist", der Anteil an Steinen mit einem Siebdurchgang von mehr als 10 Millimetern einen Anteil von 5 Gew.-%, bezogen auf die Trockenmasse des aufzubringenden Materials nicht überschreitet.

Die vorliegende Erfindung betrifft mit ihren diversen Aspekten insbesondere und bevorzugt auch ein Verfahren (wie vorstehend beschrieben, vorzugsweise wie vorstehend als bevorzugt bezeichnet), wobei die ein, zwei, drei oder mehrere Stoffe als Zuschlagstoffe ausgewählt sind aus der Gruppe bestehend aus:
- Gärrest
- Sauermolke
- Pflanzenkohle
- Tiermehl, bevorzugt Haarmehl, Hornspäne und/oder Hornmehl
- Kaffeesatz
- Nadeln von Nadelbäumen, vorzugsweise Tannennadeln
- Inhalte des tierischen Verdauungssystems, bevorzugt Mageninhalte, Darminhalte und/oder Blaseninhalte, besonders bevorzugt Mageninhalte, ganz besonders bevorzugt Panseninhalte
- Saftindustrieabfälle
- Zuckerabfälle
- Getreideschalen und/oder Getreidespelzen
   sowie
- Weitere geeignete Industrieabfälle.

Die vorliegende Erfindung betrifft mit ihren diversen Aspekten insbesondere und bevorzugt auch ein Verfahren (wie vorstehend beschrieben, vorzugsweise wie vorstehend als bevorzugt bezeichnet), wobei die ein, zwei, drei oder mehrere Stoffe als Zuschlagstoffe ausgewählt sind aus der Gruppe bestehend aus:
- Gärrest,
- Sauermolke, filtriert und/oder unfiltriert
- Viehwageneinstreu, bevorzugt Viehwageneinstreu aus Sägemehl mit Resten von tierischem Kot und/oder Urin, besonders bevorzugt Viehwageneinstreu aus Sägemehl von Nadelhölzern mit Resten von tierischem Kot und/oder Urin,
- Pflanzenkohle,
- Brennnesselsud,
- Tiermehl, bevorzugt Haarmehl, Hornspäne und/oder Hornmehl,
- Kaffeesatz,
- Nadeln von Nadelbäumen, vorzugsweise Tannennadeln,
- Inhalte des tierischen Verdauungssystems, bevorzugt Mageninhalte, Darminhalte und/oder Blaseninhalte, besonders bevorzugt Mageninhalte, ganz besonders bevorzugt Panseninhalte,
- Saftindustrieabfälle, vorzugsweise Schalen von Früchten und/oder ganze Früchte, insbesondere Zitrusfrüchte,
- Zuckerabfälle,
- Getreideschalen und/oder Getreidespelzen
   sowie
- weitere geeignete Industrieabfälle.

Eine filtrierte Sauermolke ist im Rahmen der vorliegenden Erfindung vorzugsweise eine nanofiltrierte Sauermolke.

Unter dem Begriff "Gärrest" wird vorliegend der flüssige oder feste, vorzugsweise flüssige, Rückstand bezeichnet, der bei der Vergärung von Biomasse in einer Biogasanlage zurückbleibt. Gärreste sind von Tierexkrementen wie beispielsweise Gülle zu unterscheiden.

Gärrest besitzt typischerweise einen pH-Wert im Bereich von pH 7 bis pH 8,4, bevorzugt im Bereich von pH 7,3 bis pH 7,7. In Fällen, in denen geeignete Mischungen aus vorbehandeltem Laub einerseits und Gärrest andererseits einen für die Anwendungszwecke des hergestellten Artikels zur Verwendung im Pflanzenbau unvorteilhaft hohen pH-Wert besitzen, wird dieser vorzugsweise durch Zugabe von Sauermolke reduziert.

Auch andere Gärreste, beispielweise Schlempe aus der Herstellung von Alkohol oder andere, werden ebenfalls erfolgreich und in vielen Fällen bevorzugt im erfindungsgemäßen Verfahren eingesetzt. Der Begriff "Schlempe" bezeichnet die Rückstände einer Gärflüssigkeit von Kohlenhydraten, die nach dem Abdestillieren des Alkohols zurückbleiben.

Unter dem Begriff "Sauermolke" wird Molke verstanden, die entsteht, wenn Milch durch Milchsäurebakterien zersetzt wird. Sauermolke ist vorzugsweise ein Nebenerzeugnis der Speisequark oder Cottage Cheese Produktion; hergestellt aus eingestellter Milch, die nach anerkannten Erhitzungsverfahren behandelt wurde, unter Verwendung von Starterkulturen und Lab. Die typische Zusammensetzung von Sauermolke beträgt: Wasser: max. 95 Gew.- %, Rohprotein: 0,2 Gew.-%bis 0,8 Gew.-%, Laktose: 3,0 Gew.-% bis 5,0 Gew.-% und Rohasche: 0,5 Gew.-% bis 0,8 Gew.-%.

Vorzugsweise wird im Rahmen des erfindungsgemäßen Verfahrens Sauermolke eingesetzt, die zuvor von wesentlichen Salzmengen befreit wurde. Das Einbringen von Salzen in humushaltige Substrate und/oder Böden wird auf dem Gebiet der vorliegenden Erfindung regelmäßig als negativ wahrgenommen. Dem Fachmann sind Methoden zur Reduzierung des Salzanteils von Sauermolke bekannt; er wählt je nach Bedürfnissen des Einzelfalls entsprechende Methoden wie beispielsweise Ultrafiltration oder andere selbstständig aus. Sauermolke besitzt typischerweise einen sauren pH-Wert im Bereich von pH 4,3 bis pH 4,6. Sauermolke besitzt zudem eine in vielen Fällen auf dem Gebiet der vorliegenden Erfindung als besonders vorteilhaft wahrgenommene Nährstoffzusammensetzung. Sauermolke kommt daher im Rahmen der vorliegenden Erfindung insbesondere dann zum Einsatz, wenn der pH-Wert des hergestellten Artikels zur Verwendung im Pflanzenbau entsprechend eingestellt werden soll und/oder wenn die in der Sauermolke vorhandenen Nährstoffe aus vorbehandeltem Laub oder anderen Zuschlagstoffen nicht oder lediglich weniger vorteilhaft zur Verfügung gestellt werden können.

Unter dem Begriff "Pflanzenkohle" wird Kohle verstanden, die durch pyrolytische Verkohlung pflanzlicher Ausgangsstoffe hergestellt wurde. Vorzugsweise besitzt die im Rahmen der vorliegenden Erfindung eingesetzte Pflanzenkohle einen Kohlenstoffgehalt von mehr als 50 Gew.-%. Zudem besitzt die im Rahmen der vorliegenden Erfindung eingesetzte Pflanzenkohle ein Verhältnis von Wasserstoffatomen zu Kohlenstoffatomen, welches zwischen 0,1 und 0,6 liegt, bevorzugt zwischen 0,2 und 0,5, besonders bevorzugt zwischen 0,3 und 0,5. Die eingesetzte Pflanzenkohle besitzt vorzugsweise einen pH-Wert zwischen pH 6 und pH 10. Die im erfindungsgemäßen Verfahren als Zuschlagstoffe eingesetzte Pflanzenkohle besitzt zudem eine spezifische Oberfläche im Bereich von 50 m²/g bis 900 m²/g, bevorzugt zwischen 80 m²/g und 600 m²/g, besonders bevorzugt zwischen 100 m²/g und 400 m²/g, besonders bevorzugt zwischen 120 m²/g und 300 m²/g.

Die Pflanzenkohle unterstützt die Freisetzung von Stickstoff im damit hergestellten Artikel zur Verwendung im Pflanzenbau. Sie ermöglicht, dass Pflanzen, die im Artikel zur Verwendung im Pflanzenbau als Substrat gepflanzt werden, bereits nach etwa 8 bis 12 Wochen, bevorzugt nach etwa 8 bis 10 Wochen, mit ausreichend Stickstoff versorgt sind. Entsprechend vorhandener Stickstoff wird ohne den Zusatz von Pflanzenkohle erst nach längeren Zeitdauern beispielsweise durch mikrobielle Zersetzung freigesetzt.

Unter dem Begriff "Tiermehl" werden zerspante oder zu einem Mehl vermahlene Anteile von Tieren verstanden. Der Begriff "Tiermehl" umfasst sämtliche Mehle und Zerspanungsprodukte, die sich aus der Tierkörperverwertung ergeben, insbesondere "Haarmehl", "Hornmehl", "Blutmehl", "Fleischknochenmehl", "Knochenmehl" und "Hornspäne".

Mit dem Begriff "Haarmehl" werden zu Mehl vermahlene Tierhaare bezeichnet. Insbesondere umfasst der Begriff auch zu Mehl vermahlene Federn und zu Mehl vermahlene Schweineborsten, also als Mehl vorliegendes Material der Kategorie 3 gemäß Artikel 10 der Verordnung (EG) Nr. 1069/2009. Haarmehl kann also insbesondere auch ein Borstenmehl sein.

Unter dem Begriff "Hornmehl" wird zu Mehl vermahlenes Hornmaterial horntragender Tiere verstanden. Bevorzugt werden vermahlene Hörner und Hufe von Rindern als Hornmehl eingesetzt.

Unter dem Begriff "Hornspäne" wird das zerspante Hornmaterial horntragender Tiere verstanden. Vorzugsweise werden zerspante Hörner und Hufe von Rindern eingesetzt.

Dass Hornspäne und/oder Hornmehl eingesetzt werden bedeutet, dass entweder gemäß einer ersten Alternative Hornspäne eingesetzt werden und kein Hornmehl eingesetzt wird, oder dass gemäß einer zweiten Alternative Hornmehl eingesetzt wird und keine Hornspäne eingesetzt werden, oder dass gemäß einer dritten Alternative Hornmehl und Hornspäne gemeinsam eingesetzt werden.

An anderen Stellen im vorliegenden Text an denen zwei oder mehr Alternativen über "und/oder" verknüpft sind, ist das vorstehend erläuterte Verständnis *mutatis mutandis* ebenfalls gültig.

Der Einsatz von Tiermehl, vorzugsweise Haarmehl, Hornspäne und/oder Hornmehl, im erfindungsgemäßen Verfahren sorgt für einen resultierenden Artikel zur Verwendung im Pflanzenbau, der bereits in den ersten acht bis zwölf Wochen, bevorzugt acht bis zehn Wochen, nach der Herstellung, vorzugsweise nach der Bepflanzung, für eine vorteilhafte Freisetzungscharakteristik von pflanzennutzbarem Stickstoff aus dem Artikel zur Verwendung im Pflanzenbau sorgt. Der Einsatz von Tiermehl, vorzugsweise Haarmehl, Hornspäne und/oder Hornmehl, im erfindungsgemäßen Verfahren sorgt für einen resultierenden Artikel zur Verwendung im Pflanzenbau, der bereits in den ersten acht bis zwölf Wochen, bevorzugt acht bis zehn Wochen, nach der Herstellung, vorzugsweise nach der Bepflanzung, für eine vorteilhafte Versorgung darin gepflanzter Pflanzen mit pflanzennutzbarem Stickstoff sorgt. In vielen Fällen ist es bevorzugt, wenn im erfindungsgemäßen Verfahren sowohl Tiermehl, vorzugsweise Haarmehl und/oder Hornspäne und/oder Hornmehl, einerseits als auch Pflanzenkohle andererseits gemeinsam eingesetzt werden, da sich auf diese Weise eine in vielen Fällen als besonders vorteilhaft wahrgenommene Stickstofffreisetzung aus dem resultierenden Artikel zur Verwendung im Pflanzenbau ergibt.

Der Einsatz von Viehwageneinstreu, bevorzugt Viehwageneinstreu aus Sägemehl mit Resten von tierischem Kot und/oder Urin, besonders bevorzugt Viehwageneinstreu aus Sägemehl von Nadelhölzern mit Resten von tierischem Kot und/oder Urin, im erfindungsgemäßen Verfahren ist besonders dann bevorzugt, wenn der mit dem erfindungsgemäßen Verfahren hergestellte Artikel zur Verwendung im Pflanzenbau für eine Verwendung beim Anpflanzen und/oder Umpflanzen von Bäumen vorgesehen ist. Die Kombination von Nährstoffzusammensetzung und mechanische Eigenschaften des im erfindungsgemäßen Verfahrens hergestellten Artikels zur Verwendung im Pflanzenbau ist in diesen Fällen für die Verwendung beim Anpflanzen und/oder Umpflanzen von Bäumen besser geeignet als die Kombination der entsprechenden Eigenschaften entsprechender aus dem Stand der Technik bekannter Artikel. Die mechanischen Eigenschaften werden dabei in vielen Fällen durch die Härte und Partikelgröße des eigesetzten Sägemehls beeinflusst.

Sägemehl von Nadelhölzern führt in vielen Fällen zu einem vorteilhaften niedrigen pH eines daraus hergestellten Artikels zur Verwendung im Pflanzenbau.

Unter dem Begriff "Kaffeesatz" wird im Einklang mit dem üblichen Verständnis der nach der Kaffeezubereitung im Filter oder in der Kaffeekanne zurückbleibende Rest der gemahlenen Kaffeebohnen verstanden. Der Einsatz von Kaffeesatz im erfindungsgemäßen Verfahren erlaubt ebenfalls eine gezielte Optimierung der Nährstoffzusammensetzung sowie der Zusammensetzung an Spurenelementen im resultierenden Artikel zur Verwendung im Pflanzenbau. Insbesondere enthält Kaffeesatz regelmäßig Stickstoff, Phosphor und Kalium in einer Form, die von Pflanzen gut aufgenommen werden kann. Auch zur Einstellung des pH-Wertes des resultierenden Artikels zur Verwendung im Pflanzenbau wird Kaffeesatz je nach den Erfordernissen des Einzelfalls im erfindungsgemäßen Verfahren eingesetzt. Es ist zudem bekannt, dass Kaffeesatz in vielen Fällen eine anziehende Wirkung auf Regenwürmer ausübt, die auf dem Gebiet der vorliegenden Erfindung in vielen Fällen als vorteilhaft wahrgenommen wird. Es ist zudem bekannt, dass Kaffeesatz in einigen Fällen eine abschreckende Wirkung auf Wühlmäuse ausübt; eine solche abschreckende Wirkung auf Wühlmäuse wird auf dem Gebiet der vorliegenden Erfindung in vielen Fällen ebenfalls als äußerst positiv wahrgenommen.

Mit dem Begriff "Nadeln von Nadelbäumen" werden die Nadeln von Nadelbäumen bezeichnet. In vielen Fällen ist es bevorzugt, wenn im erfindungsgemäßen Verfahren als Nadeln von Nadelbäumen "Tannennadeln", also Nadeln von Tannenbäumen eingesetzt werden. Der Einsatz von Nadeln von Nadelbäumen und insbesondere von Tannennadeln im erfindungsgemäßen Verfahren ermöglicht das gezielte Einbringen von Nährstoffen und Spurenelementen und führt in vielen Fällen zu einer besonders vorteilhaften Kombination von Nährstoffen und Spurenelementen im resultierenden Artikel zur Verwendung im Pflanzenbau.

Unter "Inhalte des tierischen Verdauungssystems" werden insbesondere Mageninhalte, Darminhalte und/oder Blaseninhalte von Schlachttieren verstanden. Typischerweise fallen entsprechende Inhalte des tierischen Verdauungssystems als Abfälle bei der Schlachtung und Verarbeitung von Schlachttieren an. Unter dem Begriff "Panseninhalte" wird der Inhalt des Pansens von Wiederkäuern verstanden. Inhalte des tierischen Verdauungssystems, vorzugsweise Panseninhalte und/oder Mageninhalte, werden in einigen Ausgestaltungen des erfindungsgemäßen Verfahrens eingesetzt, während es in vielen Ausgestaltungen des erfindungsgemäßen Verfahrens vorteilhaft ist, keine Inhalte des tierischen Verdauungssystems einzusetzen.

Unter dem Begriff "Saftindustrieabfälle" werden Rückstände von Obst und Gemüse verstanden, wie sie typischerweise bei der Saftherstellung anfallen. Insbesondere umfasst der Begriff "Saftindustrieabfälle" Abfälle die aus Schalen Fruchtfleisch, Kernen und/oder sonstigen Fruchtbestandteilen bestehen. Dem Fachmann sind die Nährstoff- und Spurenelementzusammensetzungen sowie der pH-Wert entsprechender Saftindustrieabfälle bekannt und er wählt geeignete Saftindustrieabfälle für den Einsatz im erfindungsgemäßen Verfahren nach den Erfordernissen des jeweiligen Einzelfalls selbstständig aus. Der in Saftindustrieabfällen enthaltene Zucker ist zudem für einen Hygienisierungsprozess vorteilhaft. Saftindustrieabfälle bestehend aus Rückständen von Obst sind im Rahmen der vorliegenden Erfindung bevorzugt.

Der Begriff "Zuckerabfälle" bezeichnet Pflanzenreste und Zuckerreste aus der Zuckergewinnung. Die Zuckergewinnung erfolgt beispielsweise aus Zuckerrohr, Zuckerrüben oder anderen geeigneten Pflanzen. Zuckerabfälle sind dabei selbst noch zuckerhaltig und werden im erfindungsgemäßen Verfahren insbesondere dann eingesetzt, wenn eine Hygienisierung des hergestellten Artikels zur Verwendung im Pflanzenbau erfolgt.

Unter dem Begriff "Getreideschalen" werden insbesondere auch die Schalen der Getreidearten Weizen, Roggen, Einkorn, Emmer, Kamut, Gerste, Dinkel, Hafer, Triticale, Reis, Mais und Hirse verstanden. Unter dem Begriff "Getreidespelzen" wird im Rahmen des vorliegenden Textes ein Produkt verstanden, das überwiegend aus Anteilen von Deckspelze ("Palea inferior") von Getreide und Anteilen von Vorspelze ("Palea superior") von Spelzgetreide besteht, insbesondere aus den Spelzgetreiden Einkorn, Emmer, Kamut, Gerste, Hirse, Dinkel und Hafer.

Auch Getreideschalen und Getreidespelzen sind in vielen Fällen im erfindungsgemäßen Verfahren bevorzugt, weil die Eigenschaftskombination aus Dichte, Zersetzungsgeschwindigkeit, Nährstoffzusammensetzung und Spurenelementzusammensetzung in vielen Fällen auf dem Gebiet der vorliegenden Erfindung als besonders vorteilhaft wahrgenommen wird.

Unter dem Begriff "Weitere geeignete Industrieabfälle" werden insbesondere nachhaltig herstellbare und verrottbare Industrieabfälle verstanden, die zur Verwendung im erfindungsgemäßen Verfahren geeignet sind. Sie werden vom Fachmann identifiziert und im erfindungsgemäßen Verfahren eingesetzt. Der Fachmann wählt entsprechende Industrieabfälle basierend auf seinem Fachwissen selbstständig aus und erkennt, welche dieser Industrieabfälle im erfindungsgemäßen Verfahren zu Artikeln zur Verwendung im Pflanzenbau führen, die nach den Bedürfnissen des Einzelfalls als besonders positiv wahrgenommene Eigenschaften aufweisen. Als weitere zuträgliche Industrieabfälle sind, je nach den Erfordernissen des Einzelfalls beispielsweise auch Dünger bevorzugt, die aus recycleten Nährstoffen aus häuslichen Abwässern und Bioabfällen hergestellt werden, wie sie im "Wochenblatt für Landwirtschaft und Landleben" im Artikel "Design-Dünger stößt auf Interesse bei Landwirten" am 19. Dezember 2022 beschrieben wurden.

Als weitere zuträgliche Industrieabfälle sind zudem in vielen Fällen Schalen von Erbsen, Linsen, Bohnen und weiteren Hülsenfrüchten bevorzugt.

Als weitere zuträgliche Industrieabfälle sind zudem in vielen Fällen Abwässer der Lebensmittelproduktion insbesondere Abwässer von Schlachthöfen und/oder Abwässer aus der Produktion von Sauerkraut und/oder Abwässer aus der Produktion von Rotkohl bevorzugt. In vielen Fällen ist es bevorzugt, wenn im erfindungsgemäßen Verfahren als Zuschlagstoffe drei Zuschlagstoffe ausgewählt werden, die Gärrest, Sauermolke und Pflanzenkohle sind. In vielen Fällen ist es bevorzugt, wenn im erfindungsgemäßen Verfahren als Zuschlagstoffe zwei Zuschlagstoffe ausgewählt werden, die Gärrest und Sauermolke sind. In vielen Fällen ist es bevorzugt, wenn im erfindungsgemäßen Verfahren als Zuschlagstoffe zwei Zuschlagstoffe ausgewählt werden, die Gärrest und Pflanzenkohle sind. In vielen Fällen ist es auch bevorzugt, wenn im erfindungsgemäßen Verfahren ein Zuschlagstoff eingesetzt wird und dieser eine Zuschlagstoff Gärrest ist. In vielen Fällen ist es auch bevorzugt, wenn im erfindungsgemäßen Verfahren ein Zuschlagstoff ausgewählt wird und dieser Zuschlagstoff Sauermolke ist.

Die vorliegende Erfindung betrifft mit ihren diversen Aspekten insbesondere und bevorzugt auch ein Verfahren (wie vorstehend beschrieben, vorzugsweise wie vorstehend als bevorzugt bezeichnet), wobei in Schritt (S1) vorbehandeltes Laub hergestellt wird und die Herstellung des vorbehandelten Laubs zumindest den folgenden Schritt umfasst:
(S1-a) Zerreißen von Laub, vorzugsweise Zerreißen von Laub mit einer Stachelwalze, vorzugsweise mit zwei Stachelwalzen, so dass Laubstücke als Vorbehandeltes Laub resultieren.

Die Herstellung von vorbehandeltem Laub umfasst bevorzugt das Zerreißen von Laub als Zerkleinern von Laub. Durch das Zerreißen von Laub werden besonders vorteilhafte Eigenschaften des vorbehandelten Laubs erzielt, insbesondere hinsichtlich der Aufnahme von Flüssigkeiten, Nährstoffen und Geruchsstoffen. Das Zerreißen von Laub mit einer Stachelwalze führt im erfindungsgemäßen Verfahren in vielen Fällen zu einer besonders vorteilhaften Kombination von effizienter Verfahrensführung und vorteilhaften Eigenschaften des vorbehandelten Laubs.

Vorbehandeltes Laub enthält weniger als 20 % Laubstücke, bevorzugt weniger als 10 % Laubstücke, besonders bevorzugt weniger als 5 % Laubstücke, die größer sind als 50 % der durchschnittlichen Größe eines Blattes der jeweiligen Laubsorte; jeweils bezogen auf die Gesamtanzahl der im vorbehandelten Laub vorhandenen Laubstücke.

In vielen Fällen ist es bevorzugt, das erfindungsgemäße Verfahren so durchzuführen, dass ein Artikel zur Verwendung im Pflanzenbau resultiert, der eine Schüttdichte im Bereich von 50 kg/m³ bis 500 kg/m³ besitzt, bevorzugt im Bereich von 100 kg/m³ bis 480 kg/m³, besonders bevorzugt im Bereich von 150 kg/m³ bis 430 kg/m³, ganz besonders bevorzugt im Bereich von 200 kg/m³ bis 400 kg/m³. Der Fachmann wählt die Art und Menge des im Verfahren eingesetzten vorbehandelten Laubs und der im Verfahren eingesetzten Zuschlagstoffe entsprechend der jeweiligen Anforderungen an die Schüttdichte selbstständig aus.

Die vorliegende Erfindung betrifft mit ihren diversen Aspekten insbesondere und bevorzugt auch ein Verfahren (wie vorstehend beschrieben, vorzugsweise wie vorstehend als bevorzugt bezeichnet), wobei in Schritt (S1) vorbehandeltes Laub hergestellt wird und die Herstellung des vorbehandelten Laubs zumindest den folgenden Schritt umfasst:
(S1-b) Konditionieren von Laub, wobei das Konditionieren das Einstellen der Feuchtigkeit im Laub durch Trocknen und/oder Anfeuchten des Laubs umfasst, so dass konditioniertes Laub resultiert;
   und/oder (bevorzugt "und")
   Konditionieren von Laubstücken als vorbehandeltes Laub, wobei das Konditionieren das Einstellen der Feuchtigkeit in den Laubstücken als Vorbehandeltes Laub durch Trocknen und/oder Anfeuchten der Laubstücke als vorbehandeltes umfasst, so dass konditioniertes vorbehandeltes Laub resultiert;
wobei das Konditionieren von Laub und/oder das Konditionieren von vorbehandeltem Laub in Schritt (S1-b) vorzugsweise so durchgeführt wird, dass Laub und/oder vorbehandeltes Laub mit einem Wasseranteil im Bereich von 5 Gew.-% bis 40 Gew.-% resultiert, bevorzugt mit einem Wasseranteil im Bereich von 6 Gew.-% bis 35 Gew.-%, besonders bevorzugt mit einem Wasseranteil im Bereich von 7 Gew.-% bis 30 Gew.-%, jeweils bezogen auf die Gesamtmasse des konditionierten Laubs bzw. des hergestellten konditionierten vorbehandelten Laubs.

In vielen Fällen ist es bevorzugt, das Laub vor oder nach dem Vorbehandeln zu konditionieren, insbesondere die Feuchtigkeit einzustellen. Mit dem Einstellen der Feuchtigkeit im Laub bzw. im vorbehandelten Laub durch Trocknen und/oder Anfeuchten wird die Wasseraufnahmefähigkeit des im erfindungsgemäßen Verfahren eingesetzten vorbehandelten Laubs beeinflusst. Dieser Aspekt führt auch zu einer Beeinflussung des Geruchs, der Schüttdichte und des spezifischen Gewichts des resultierenden Artikels zur Verwendung im Pflanzenbau. Der Fachmann entscheidet nach den Bedürfnissen des Einzelfalls selbstständig, ob zunächst ein Konditionieren und dann ein Vorbehandeln (mechanisches Zerkleinern) oder zunächst ein Vorbehandeln (mechanisches Zerkleinern) und dann ein Konditionieren erfolgen soll. In vielen Fällen ist es bevorzugt, wenn zunächst ein Trocknen des Laubs erfolgt und erst danach ein Vorbehandeln, das heißt ein mechanisches Zerkleinern, stattfindet. Auf diese Weise wird in vielen Fällen ein konditioniertes vorbehandeltes Laub als vorbehandeltes Laub erhalten, welches im erfindungsgemäßen Verfahren besonders vorteilhafte Eigenschaften, insbesondere hinsichtlich der Aufnahme flüssiger Komponenten, aufweist.

In vielen Fällen ist ein erfindungsgemäßes Verfahren besonders bevorzugt, wobei zwischen dem Vorbehandeln des Laubs und dem Beginn des kontaktierenden Vermischens des vorbehandelten Laubs mit einem, zwei, drei oder mehreren Stoffen als Zuschlagstoffen, so dass ein Artikel zur Verwendung im Pflanzenbau resultiert in Schritt (S3), ein Zeitraum im Bereich von 1 Sekunde bis 10 Minuten liegt, bevorzugt im Bereich von 2 Sekunden bis 5 Minuten, besonders bevorzugt im Bereich von 2 Sekunden bis 3 Minuten, ganz besonders bevorzugt im Bereich von 3 Sekunden bis 30 Sekunden.

Die vorliegende Erfindung betrifft mit ihren diversen Aspekten insbesondere und bevorzugt auch ein Verfahren (wie vorstehend beschrieben, vorzugsweise wie vorstehend als bevorzugt bezeichnet), wobei
- das kontaktierende Vermischen von vorbehandeltem Laub mit einem, zwei, drei oder mehreren Stoffen als Zuschlagstoffe in Schritt (S3) über einen Zeitraum von 2 Minuten bis 30 Minuten, bevorzugt von 3 Minuten bis 10 Minuten, besonders bevorzugt von 4 Minuten bis 7 Minuten durchgeführt wird;
   und/oder (bevorzugt "und")
- das kontaktierende Vermischen von vorbehandeltem Laub mit einem, zwei, drei oder mehreren Stoffen als Zuschlagstoffe in Schritt (S3) so durchgeführt wird, dass zunächst 15 Gew.-% bis 45 Gew.-%, bevorzugt 20 Gew.-% bis 40 Gew.-%, besonders bevorzugt 25 Gew.-% bis 35 Gew.-%, des hergestellten oder bereitgestellten vorbehandelten Laubs mit 100 Gew.-% der Hergestellten oder bereitgestellten Zuschlagstoffe kontaktierend vorvermischt werden, so dass eine Vormischung aus vorbehandeltem Laub und Zuschlagstoffen resultiert, und diese Vormischung aus vorbehandeltem Laub und Zuschlagstoffen anschließend mit der restlichen Menge des hergestellten oder bereitgestellten vorbehandelten Laubs kontaktierend vermischt wird, so dass ein Artikel zur Verwendung im Pflanzenbau resultiert.

Das kontaktierende Vermischen von vorbehandeltem Laub mit einem, zwei, drei oder mehreren Stoffen als Zuschlagstoffe über die genannten Zeiträume ermöglicht einen Mischprozess, der zu optimalen Vermischungsergebnissen führt, ohne dass die strukturellen Eigenschaften der im erfindungsgemäßen Verfahren eingesetzten Bestandteile in negativer Weise beeinflusst werden. Dem Fachmann auf dem Gebiet der vorliegenden Erfindung sind entsprechende Mischmethoden bekannt und er wählt jeweilige Mischmethoden anhand der eingesetzten Stoffe und der gewünschten Konsistenz des resultierenden Artikels zur Verwendung im Pflanzenbau selbstständig aus. Geeignete Mischmethoden umfassen beispielsweise je nach den Erfordernissen des Einzelfalls das Mischen mit einem Paddelmischer, einem Schneckenmischer, einem Doppelwalzenmischer und/oder einem Futtermischwagen.

In einigen Fällen ist es bevorzugt, zunächst einen Teil des vorbehandelten Laubs mit den im erfindungsgemäßen Verfahren eingesetzten Zuschlagstoffen zu einer Vormischung zu vermischen und erst danach diese Vormischung mit dem restlichen Anteil der in Schritt (S1) hergestellten oder bereitgestellten vordefinierten Menge vorbehandelten Laubs zu vermischen, sodass ein Artikel zur Verwendung im Pflanzenbau resultiert. Insbesondere zur Reduzierung von als negativ wahrgenommenen Gerüchen von eingesetzten Zuschlagstoffen ist diese Vorgehensweise in vielen Fällen bevorzugt. Das Erwärmen des Artikels zur Verwendung im Pflanzenbau führt zu einer Reduzierung der Bakterienlast im Artikel zur Verwendung im Pflanzenbau und reduziert gleichzeitig die Keimfähigkeit von Pflanzensamen, die über die einzelnen Bestandteile in den Artikel gelangen können. Keimfähige Samen im Artikel zur Verwendung im Pflanzenbau sind auf dem Gebiet der vorliegenden Erfindung in den allermeisten Fällen äußerst unerwünscht.

Ein Erwärmen wie es auf dem Gebiet der vorliegenden Erfindung auch als "Hygienisieren" bekannt ist, ist im Rahmen der vorliegenden Erfindung bevorzugt. Unter der "Hygienisierung" eines Artikels wird im Rahmen des vorliegenden Textes eine Reduktion von im Artikel enthaltenen pathogenen Organismen verstanden und zwar vorzugsweise eine Reduktion in einem solchen Ausmaß, dass die verbleibende Restkonzentration an pathogenen Organismen nicht mehr zu einer Gesundheitsgefährdung von Mensch und Tier führen kann. Insbesondere umfasst der Begriff "Hygienisieren" im Rahmen der vorliegenden Erfindung die Methoden zur hygienisierenden Behandlung wie sie in §2 Nr. 2 und Anhang 2 der "Bioabfallverordnung in der Fassung der Bekanntmachung vom 4. April 2013 (BGBI. I S. 658), die zuletzt durch Artikel 1 der Verordnung vom 28. April 2022 (BGBI. I S. 700) geändert worden ist" beschreiben sind. Besonders bevorzugt ist das Hygienisieren im Rahmen der vorliegenden Erfindung eine Pasteurisierung gemäß Anhang 2 Nummer 2.2.1 der "Bioabfallverordnung in der Fassung der Bekanntmachung vom 4. April 2013 (BGBI. I S. 658), die zuletzt durch Artikel 1 der Verordnung vom 28. April 2022 (BGBI. I S. 700) geändert worden ist". In vielen Fällen wird durch das Hygienisieren das reproduzierbare Einstellen einer als besonders vorteilhaft wahrgenommene Nährstoffzusammensetzung erleichtert. In vielen Fällen wird durch das Hygienisieren das reproduzierbare Einstellen einer als besonders vorteilhaft wahrgenommene Nährstoffzusammensetzung nach einer kürzeren Zeit erreicht, verglichen mit einem Artikel der nicht einem Hygienisieren unterzogen wurde.

Die vorliegende Erfindung betrifft mit ihren diversen Aspekten insbesondere und bevorzugt auch ein Verfahren (wie vorstehend beschrieben, vorzugsweise wie vorstehend als bevorzugt bezeichnet), wobei
- nach dem kontaktierenden Vermischen von vorbehandeltem Laub mit einem, zwei, drei oder mehreren Stoffen als Zuschlagstoffe, so dass ein Artikel zur Verwendung im Pflanzenbau resultiert, in Schritt (S3), ein weiterer Verfahrensschritt (S4) durchgeführt wird, bestehend aus oder umfassend:
   - Erwärmen des Artikels zur Verwendung im Pflanzenbau auf eine definierte Temperatur im Bereich von 60 °C bis 90 °C, bevorzugt im Bereich von 68 °C bis 82 °C, besonderes bevorzugt im Bereich von 70°C bis 77 °C;
      wobei vorzugsweise
      - das Erwärmen des Artikels zur Verwendung im Pflanzenbau auf eine definierte Temperatur im Bereich von 60 °C bis 90 °C, bevorzugt im Bereich von 68 °C bis 82 °C, besonderes bevorzugt im Bereich von 70°C bis 77 °C so durchgeführt wird, dass die Temperatur für einen Zeitraum von 2 Stunden bis 12 Stunden, bevorzugt von 3 Stunden bis 10 Stunden, besonders bevorzugt von 5 Stunden bis 8 Stunden innerhalb des definierten Bereichs gehalten wird, so dass ein veredelter Artikel zur Verwendung im Pflanzenbau resultiert; besonders bevorzugt wird das Erwärmen des Artikels zur Verwendung im Pflanzenbau auf eine definierte Temperatur so durchgeführt, dass ein hygienisierter veredelter Artikel zur Verwendung im Pflanzenbau resultiert.

Geeignete Methoden zum Erwärmen sind dem Fachmann bekannt. Das Erwärmen des Artikels zur Verwendung im Pflanzenbau auf die angegebenen Temperaturen ist besonders energieeffizient durchzuführen, wenn Zuschlagstoffe ausgewählt werden, die Zucker enthalten.

Die vorliegende Erfindung betrifft mit ihren diversen Aspekten insbesondere und bevorzugt auch ein Verfahren (wie vorstehend beschrieben, vorzugsweise wie vorstehend als bevorzugt bezeichnet), wobei das Massenverhältnis von hergestelltem oder bereitgestelltem vorbehandelten Laub in Schritt (S1) einerseits und hergestellten oder bereitgestellten Zuschlagstoffen in Schritt (S2) andererseits so gewählt ist, dass der in Schritt (S3) beim kontaktierenden Vermischen von vorbehandeltem Laub mit zwei, drei oder mehreren Stoffen als Zuschlagstoffe, resultierende Artikel zur Verwendung im Pflanzenbau einen Wasseranteil im Bereich von 6 Gew.-% bis 50 Gew.-%, bevorzugt im Bereich von 7 Gew.-% bis 40 Gew.-%, besonders bevorzugt im Bereich von 8 Gew.-% bis 35 Gew.-%, ganz besonders bevorzugt im Bereich von 25 Gew.-% bis 30 Gew.-% aufweist.

Die vorliegende Erfindung betrifft mit ihren diversen Aspekten insbesondere und bevorzugt auch ein Verfahren (wie vorstehend beschrieben, vorzugsweise wie vorstehend als bevorzugt bezeichnet), wobei das Massenverhältnis von hergestelltem oder bereitgestelltem vorbehandelten Laub in Schritt (S1) einerseits und hergestelltem oder bereitgestelltem Zuschlagstoff in Schritt (S2) andererseits so gewählt ist, dass der in Schritt (S3) beim kontaktierenden Vermischen von vorbehandeltem Laub mit einem Stoff als Zuschlagstoff, resultierende Artikel zur Verwendung im Pflanzenbau einen Wasseranteil im Bereich von 6 Gew.-% bis 50 Gew.-%, bevorzugt im Bereich von 7 Gew.-% bis 40 Gew.-%, besonders bevorzugt im Bereich von 8 Gew.-% bis 35 Gew.-%, ganz besonders bevorzugt im Bereich von 25 Gew.-% bis 30 Gew.-% aufweist.

Die Durchführung des erfindungsgemäßen Verfahrens sodass der resultierende Artikel zur Verwendung im Pflanzenbau einen Wasseranteil im vorstehend definierten Bereich besitzt, ist in vielen Fällen besonders bevorzugt. Auf diese Weise lässt sich das Verfahren in vielen Fällen besonders effizient durchführen und/oder der resultierende Artikel zur Verwendung im Pflanzenbau besitzt Eigenschaften, die auf dem Gebiet der vorliegenden Erfindung als besonders positiv wahrgenommen werden. Insbesondere lässt sich auf diese Weise ein erfindungsgemäßes Verfahren besonders vorteilhaft durchführen und ein entsprechender resultierender Artikel zur Verwendung im Pflanzenbau lässt sich auf besonders einfache Art und Weise transportieren und einsetzen. Insbesondere in den Fällen, in denen der Artikel zur Verwendung im Pflanzenbau eine gärtnerische Erde und/oder ein Kultursubstrat ist, insbesondere Pflanzenerde und/oder Blumenerde, ist ein Wasseranteil im angegebenen Bereich besonders vorteilhaft.

Die vorliegende Erfindung betrifft mit ihren diversen Aspekten insbesondere und bevorzugt auch ein Verfahren (wie vorstehend beschrieben, vorzugsweise wie vorstehend als bevorzugt bezeichnet), wobei der resultierende Artikel zur Verwendung im Pflanzenbau, vorzugsweise der getrocknete Artikel zur Verwendung im Pflanzenbau einen pH-Wert im Bereich von pH 3 bis pH 7,5 aufweist, bevorzugt im Bereich von pH 4 bis pH 7, besonders bevorzugt im Bereich von pH 4,5 bis pH 6,8, ganz besonders bevorzugt im Bereich von pH 5 bis pH 6.

Der Fachmann wählt das vorbehandelte Laub und die eingesetzten Zuschlagstoffe im erfindungsgemäßen Verfahren in vielen Fällen besonders bevorzugt so, dass ein Artikel zur Verwendung im Pflanzenbau mit einem pH-Wert im vorstehend definierten Bereich resultiert. Die vorstehend definierten pH-Wert-Bereiche werden bei Artikeln zur Verwendung im Pflanzenbau regelmäßig als besonders vorteilhaft wahrgenommen. In vielen Fällen ist es bevorzugt, dass das erfindungsgemäße Verfahren so durchgeführt wird, dass der pH-Wert des resultierenden Artikels zur Verwendung im Pflanzenbau auf die Anforderungen einer jeweiligen Pflanzenart oder Pflanzensorte eingestellt wird; der Fachmann wählt bei der Durchführung des erfindungsgemäßen Verfahrens in solchen Fällen geeignete vordefinierte Mengen und geeignete Zuschlagstoffe auf Basis seines Fachwissens aus.

Die vorliegende Erfindung betrifft mit ihren diversen Aspekten insbesondere und bevorzugt auch ein Verfahren (wie vorstehend beschrieben, vorzugsweise wie vorstehend als bevorzugt bezeichnet), wobei der in Schritt (S3) beim kontaktierenden Vermischen von vorbehandeltem Laub mit einem, zwei, drei oder mehreren Stoffen als Zuschlagstoffe resultierende Artikel zur Verwendung im Pflanzenbau in einem zusätzlichen Verfahrensschritt mit Anteilen von zerkleinertem Gestein, wie zum Beispiel Sanden, vermischt wird.

In vielen Fällen, ist ein solcher Artikel zur Verwendung im Pflanzenbau, umfassend Anteile von zerkleinertem Gestein, wie zum Beispiel Sand, auf dem Gebiet der vorliegenden Erfindung besonders bevorzugt; dies ist insbesondere dann der Fall, wenn der Artikel zur Verwendung im Pflanzenbau im Pflanzenbau verwendet wird, ohne dass vor dem Einsetzen von Pflanze oder Samen eine Vermischung des Artikels zur Verwendung im Pflanzenbau mit Feststoffen erfolgt.

Die vorliegende Erfindung betrifft mit ihren diversen Aspekten insbesondere und bevorzugt auch ein Verfahren (wie vorstehend beschrieben, vorzugsweise wie vorstehend als bevorzugt bezeichnet), wobei das in Schritt (S1) hergestellte oder bereitgestellte vorbehandelte Laub, von Laubbäumen stammt und jahreszeitlich bedingt von den Bäumen gefallen ist;
und/oder (bevorzugt "und")
wobei das vorbehandelte Laub in zerkleinerter Form als Laubstücke vorliegt und zumindest 90% der Laubstücke, vorzugsweise zumindest 95% der Laubstücke in keiner Raumrichtung eine Ausdehnung von mehr als 30 mm besitzen, bevorzugt von mehr als 25 mm, besonders bevorzugt von mehr als 20 mm;
und/oder (bevorzugt "und")
wobei das vorbehandelte Laub in zerkleinerter Form als Laubstücke vorliegt zumindest 90% der Laubstücke, vorzugsweise zumindest 95% der Laubstücke in zumindest zwei Raumrichtungen eine Ausdehnung von weniger als 5 mm besitzen, bevorzugt von weniger als 4 mm besonders bevorzugt von weniger als 3 mm, ganz besonders bevorzugt von weniger als 1 mm.

In vielen Fällen ist es besonders bevorzugt, wenn das hergestellte oder bereitgestellte vorbehandelte Laub von Laubbäumen stammt und jahreszeitlich bedingt von den Bäumen gefallen ist. In diesen Fällen ist eine Herstellung des vorbehandelten Laubs besonders vorteilhaft möglich, da keine Pflanzen aktiv beschädigt werden.

Als Laubbäume werden im Rahmen der vorliegenden Erfindung sämtliche Laubbaumarten verstanden, insbesondere auch Bäume der Gattungen Ahorne (Acer), Erlen (Alnus), Birken (Betula), Hainbuchen (Carpinus), Weißdorne (Crataegus), Buchen (Fagus), Eschen (Fraxinus), Stechpalmen (Ilex), Äpfel (Malus), Pappeln (Populus), Steinobstbäume (Prunus), Birnen (Pyrus), Eichen (Quercus), Weiden (Salix), Mehlbeeren (Sorbus), Linden (Tilia) und Ulmen (Ulmus).

Die jeweils angegebenen Größen der Laubstücke führen zu einem besonders effizienten Einsatz im erfindungsgemäßen Verfahren und gleichzeitig zu besonders vorteilhaften Eigenschaften im resultierenden Artikel zur Verwendung im Pflanzenbau.

Die vorliegende Erfindung betrifft mit ihren diversen Aspekten insbesondere und bevorzugt auch ein Verfahren (wie vorstehend beschrieben, vorzugsweise wie vorstehend als bevorzugt bezeichnet), wobei
- beim kontaktierenden Vermischen von vorbehandeltem Laub mit einem, zwei, drei oder mehreren Stoffen als Zuschlagstoffe in Schritt (S3), so dass der Artikel zur Verwendung im Pflanzenbau resultiert, zusätzlich Tierexkremente, vorhanden sind;
   und
- die vorhandenen Tierexkremente einen Wasseranteil von mehr als 70 Gew.-%, vorzugsweise von mehr als 90 Gew.-% aufweisen, jeweils bezogen auf die im Verfahren eingesetzte Gesamtmasse an Tierexkrementen.

In einigen Fällen ist es auch bevorzugt, wenn im erfindungsgemäßen Verfahren zusätzlich Tierexkremente eingesetzt werden. Diese führen in vielen Fällen bei Durchführung des erfindungsgemäßen Verfahrens zu Artikeln zur Verwendung im Pflanzenbau, die eine besonders vorteilhafte Nährstoffzusammensetzung aufweisen.

Der Einsatz von Tierexkrementen mit einem Wasseranteil in den angegebenen Bereichen führt bei Durchführung des erfindungsgemäßen Verfahrens zu Artikeln zur Verwendung im Pflanzenbau, die trotz des Vorhandenseins von Tierexkrementen deren charakteristischen Geruch nur in sehr stark reduzierter Weise, in vielen Fällen gar nicht aufweisen. Dies ist auf dem Gebiet der vorliegenden Erfindung regelmäßig bevorzugt.

Wenn Tierexkremente im Artikel zur Verwendung im Pflanzenbau eingesetzt werden, ist es in vielen Fällen bevorzugt, vor der Verwendung des Artikels zur Verwendung im Pflanzenbau ein Erwärmen des Artikels zur Verwendung im Pflanzenbau, vorzugsweise ein Hygienisieren, durchzuführen.

Die vorliegende Erfindung betrifft mit ihren diversen Aspekten insbesondere und bevorzugt auch ein Verfahren (wie vorstehend beschrieben, vorzugsweise wie vorstehend als bevorzugt bezeichnet), wobei
- in zumindest 90 von 100 jeweils 100 cm³ großen, willkürlich aus einer Gesamtmasse von 1 m³ des in Schritt (S3) resultierenden Artikels zur Verwendung im Pflanzenbau ausgewählten Volumenelementen, der Natriumanteil, bestimmt mittels VDLUFA Methodenbuch Band I, A 13.4.3, 2012-01, um nicht mehr als 30 % differiert, bevorzugt um nicht mehr als 20 % differiert, besonders bevorzugt um nicht mehr als 10 % differiert, bezogen auf den Anteil des Natriums im Granulat insgesamt;
   und/oder (bevorzugt "und")
- in zumindest 90 von 100 jeweils 100 cm³ großen, willkürlich aus einer Gesamtmasse von 1 m³ des in Schritt (S3) resultierenden Artikels zur Verwendung im Pflanzenbau ausgewählten Volumenelementen, der Anteil der Trockensubstanz, bestimmt mittels VDLUFA Methodenbuch Band I, A 2.1.1, 1991-01, um nicht mehr als 30 % differiert, bevorzugt um nicht mehr als 20 % differiert, besonders bevorzugt um nicht mehr als 10 % differiert, bezogen auf den Anteil des Natriums im Granulat insgesamt;
   und/oder (bevorzugt "und")
- in zumindest 90 von 100 jeweils 100 cm³ großen, willkürlich aus einer Gesamtmasse von 1 m³ des in Schritt (S3) resultierenden Artikels zur Verwendung im Pflanzenbau ausgewählten Volumenelementen, der pH Wert, CaCl₂, bestimmt mittels VDLUFA Methodenbuch Band I, A 5.1.1, 2016-01, um nicht mehr als 30 % differiert, bevorzugt um nicht mehr als 20 % differiert, besonders bevorzugt um nicht mehr als 10 % differiert, bezogen auf den Anteil des Natriums im Granulat insgesamt;
   und/oder (bevorzugt "und")
- in zumindest 90 von 100 jeweils 100 cm³ großen, willkürlich aus einer Gesamtmasse von 1 m³ des in Schritt (S3) resultierenden Artikels zur Verwendung im Pflanzenbau ausgewählten Volumenelementen, der Nitrat-Stickstoff, NOs-N, in CAT, bestimmt mittels VDLUFA Methodenbuch Band I, A 13.1.1, 2004-01, um nicht mehr als 30 % differiert, bevorzugt um nicht mehr als 20 % differiert, besonders bevorzugt um nicht mehr als 10 % differiert, bezogen auf den Anteil des Natriums im Granulat insgesamt;
   und/oder (bevorzugt "und")
- in zumindest 90 von 100 jeweils 100 cm³ großen, willkürlich aus einer Gesamtmasse von 1 m³ des in Schritt (S3) resultierenden Artikels zur Verwendung im Pflanzenbau ausgewählten Volumenelementen, der Gesamtanteil an organischem Kohlenstoff, TOC, in der Trockensubstanz, bestimmt mittels VDLUFA Methodenbuch Band I, A 4.1.3.2, 2016-01, um nicht mehr als 30 % differiert, bevorzugt um nicht mehr als 20 % differiert, besonders bevorzugt um nicht mehr als 10 % differiert, bezogen auf den Anteil des Natriums im Granulat insgesamt.

In vielen Fällen ist es bevorzugt, wenn einzelne oder sämtliche der vorstehend angegebenen Inhaltsstoffe gleichmäßig über die gesamte Menge des Artikels zur Verwendung im Pflanzenbau verteilt sind, wie es sich aus den Vorstehend definierten Anforderungen ergibt. Dem Fachmann ist bekannt, wie er entsprechende Verfahrensergebnisse erzielen kann. Die entsprechende Durchführung des erfindungsgemäßen Verfahrens führt zu besonders vorteilhaften Artikeln zur Verwendung im Pflanzenbau hinsichtlich der Eigenschaftskombinationen insbesondere bei der Verwendung als gärtnerische Erde und/oder Kultursubstrat.

Die vorliegende Erfindung betrifft mit ihren diversen Aspekten insbesondere und bevorzugt auch ein Verfahren (wie vorstehend beschrieben, vorzugsweise wie vorstehend als bevorzugt bezeichnet), wobei beim kontaktierenden Vermischen von vorbehandeltem Laub mit einem, zwei, drei oder mehreren Stoffen als Zuschlagstoffe im Schritt (S3), zumindest zwei, drei oder mehrere Stoffen als Zuschlagstoffe zugegen sind und wobei
- als zumindest einer der zwei, drei oder mehreren Stoffe als Zuschlagstoffe Gärrest ausgewählt ist, bevorzugt hygienisierter Gärrest ausgewählt ist und wobei der Massenanteil von vorbehandeltem Laub im Bereich von 20 Gew.-% bis 90 Gew.-% liegt, bevorzugt im Bereich von 40 Gew.-% bis 85 Gew.-% liegt, besonders bevorzugt im Bereich von 45 Gew.-% bis 75 Gew.-%, ganz besonders bevorzugt im Bereich von 48 Gew.-% bis 62 Gew.-% sehr besonders bevorzugt im Bereich von 50 Gew.-% bis 60 Gew.-%.

Die Kombination aus vorbehandeltem Laub und Gärrest als zumindest einem Zuschlagstoff in den angegebenen Massenanteilen führt bei Durchführung des erfindungsgemäßen Verfahrens zu einem Artikel zur Verwendung im Pflanzenbau, der eine besonders gut reproduzierbare Zusammensetzung aufweist und/oder dessen Zusammensetzung vorteilhaft kleine Schwankungen besitzt.

Die vorliegende Erfindung betrifft auch einen Artikel zur Verwendung im Pflanzenbau, herstellbar in einem Verfahren wie vorstehend beschrieben, vorzugsweise wie vorstehend als bevorzugt bezeichnet.

Die vorliegende Erfindung betrifft auch einen Artikel zur Verwendung im Pflanzenbau, hergestellt in einem Verfahren wie vorstehend beschrieben, vorzugsweise wie vorstehend als bevorzugt bezeichnet.

Besonders bevorzugt ist in vielen Fällen ein Artikel zur Verwendung im Pflanzenbau hergestellt in einem Verfahren wie vorstehend beschrieben, vorzugsweise wie vorstehend als bevorzugt bezeichnet, wobei der Artikel zur Verwendung im Pflanzenbau Anteile von zerkleinertem Gestein, wie zum Beispiel Sand umfasst.

Mit einem im erfindungsgemäßen Verfahren hergestellten Artikel zur Verwendung im Pflanzenbau werden die vorstehend genannten Vorteile und Effekte in besonders positivem Maße verwirklicht.

Die vorliegende Erfindung betrifft auch eine Verwendung eines Artikels zur Verwendung im Pflanzenbau, wie vorstehend beschrieben, vorzugsweise wie vorstehend als bevorzugt bezeichnet im Ackerbau und/oder Gartenbau.

In vielen Fällen ist es besonderes bevorzugt, wenn der Artikel zur Verwendung im Pflanzenbau im Ackerbau und/oder Gartenbau zur Anpassung der Bodenzusammensetzung an den Bedarf anzubauender Pflanzenarten verendet wird.

Die vorliegende Erfindung betrifft auch vorbehandeltes Laub, herstellbar in einem Verfahren umfassend Verfahrensschritte und/oder Merkmale wie vorstehend beschrieben, vorzugsweise in einem Verfahren umfassend Verfahrensschritte wie vorstehend als bevorzugt bezeichnet.

Die vorliegende Erfindung betrifft auch vorbehandeltes Laub, hergestellt in einem Verfahren umfassend Verfahrensschritte und/oder Merkmale wie vorstehend beschrieben, vorzugsweise in einem Verfahren umfassend Verfahrensschritte wie vorstehend als bevorzugt bezeichnet.

Mit vorbehandeltem Laub, hergestellt in einem Verfahren umfassend Verfahrensschritte wie vorstehend beschrieben, werden bei Durchführung des erfindungsgemäßen Verfahrens die angegebenen Vorteile und Effekte in besonders positivem Ausmaß erreicht.

Die vorliegende Erfindung betrifft auch ein Kit zum Herstellen eines Artikels zur Verwendung im Pflanzenbau, bevorzugt zum Herstellen eines Artikels zur Verwendung im Pflanzenbau wie vorstehend beschrieben, vorzugsweise wie vorstehend als bevorzugt bezeichnet, besonders bevorzugt zur Herstellung eines Artikels zur Verwendung im Pflanzenbau in einem Verfahren wie vorstehend beschrieben, vorzugsweise in einem Verfahren wie vorstehend als bevorzugt bezeichnet, wobei das Kit zumindest umfasst:
- als oder in einem ersten Bestandteil des Kits eine Menge von vorbehandeltem Laub;
- als oder in einem zweiten Bestandteil des Kits eine Menge von einem, zwei, drei oder mehreren Stoffen als Zuschlagstoffe, die ausgewählt sind aus der Gruppe bestehend aus:
   - Gärrest
   - Sauermolke
   - Pflanzenkohle
   - Tiermehl, bevorzugt Haarmehl, Hornspäne und/oder Hornmehl
   - Kaffeesatz
   - Nadeln von Nadelbäumen, vorzugsweise Tannennadeln
   - Inhalte des tierischen Verdauungssystems, bevorzugt Mageninhalte, Darminhalte und/oder Blaseninhalte, besonders bevorzugt Mageninhalte, ganz besonders bevorzugt Panseninhalte
   - Saftindustrieabfälle
   - Zuckerabfälle
   - Getreideschalen und/oder Getreidespelzen
      sowie
   - Weitere geeignete Industrieabfälle;
   wobei der erste und der zweite Bestandteil des Kits räumlich separat voneinander angeordnet sind.

Mit einem erfindungsgemäßen Kit, wie vorstehend definiert, wird das erfindungsgemäße Verfahren auf besonders effiziente Weise durchgeführt. Die entsprechenden Vorteile und Effekte werden in besonderem Maße erreicht.

Die Erfindung wird nachfolgend anhand von Beispielen näher erläutert.

### Beispiel A - Herstellen des vorbehandelten Laubs

Es wurde beispielhaft gemischtes Laub, umfassend Laub der Laubbaumarten Buche, Platane, Ahorn, Linde und Kastanie eingesetzt, welches jahreszeitlich bedingt von den Bäumen gefallen war. Im Rahmen der vorliegenden Erfindung ist Laub aber auch sortenrein einsetzbar und es ist auch das Laub anderer Laubbaumarten einsetzbar.

Das Laub wurde mit einer Stachelwalze zerrissen, als beispielhafte Umsetzung eines mechanischen Zerkleinerns, so dass vorbehandeltes Laub resultierte. Das vorbehandelte Laub wurde mit einem Trommeltrockner unter kontinuierlicher Bewegung auf einen Feuchtegehalt von ca. 20 Gew.-% getrocknet, so dass konditioniertes vorbehandeltes Laub als Beispiel für vorbehandeltes Laub resultierte.

### Beispiel B - Beispielrezepturen

Die nachfolgend definierten Beispielrezepturen sind lediglich beispielhaft für andere Rezepturen, die ebenfalls bevorzugt zur Durchführung des erfindungsgemäßen Verfahrens eingesetzt werden können.

Beispielhaft für Schritt (S1) eines erfindungsgemäßen Verfahrens wurde jeweils in einer vordefinierten Menge gemäß den nachfolgend definierten Beispielrezepturen jeweils in einem ersten Behältnis vorbehandeltes Laub bereitgestellt, welches gemäß der Vorgehensweise aus obigem Beispiel A hergestellt wurde.

Beispielhaft für Schritt (S2) eines erfindungsgemäßen Verfahrens wurden jeweils in einer vordefinierten Menge gemäß den nachfolgend definierten Beispielrezepturen jeweils in einem zweiten Behältnis die in den Beispielrezepturen näher bezeichneten Zuschlagstoffe gemeinsam bereitgestellt.

Sofern nicht im Einzelnen anders angegeben, wurde als flüssiger Gärrest aus einer Biogasanlage ein flüssiger Gärrest aus einer Nawaro-Biogasanlage eingesetzt.

Der Anteil in Gew.-% ist in den Beispielrezepturen stets bezogen auf die Gesamtmasse des resultierenden Artikels.

**Tabelle 1: Beispielrezeptur 1**

| Beispielrezeptur 1 | | |
|---|---|---|
| | Masse [kg] | Anteil [Gew.-%] |
| Vorbehandeltes Laub | 180 | 18 |
| Flüssiger Gärrest aus einer Biogasanlage | 540 | 54 |
| Kaffeesatz | 280 | 28 |
| Gesamtmasse des resultierenden Artikels | 1000 | |

**Tabelle 2: Beispielrezeptur 2**

| Beispielrezeptur 2 | | |
|---|---|---|
| | Masse [kg] | Anteil [Gew.-%] |
| Vorbehandeltes Laub | 400 | 40 |
| Flüssiger Gärrest aus einer Biogasanlage | 400 | 40 |
| Sauermolke | 200 | 20 |
| Gesamtmasse des resultierenden Artikels | 1000 | |

**Tabelle 3: Beispielrezeptur 3**

| Beispielrezeptur 3 | | |
|---|---|---|
| | Masse [kg] | Anteil [Gew.-%] |
| Vorbehandeltes Laub | 400 | 40 |
| Flüssiger Gärrest aus einer Biogasanlage | 400 | 40 |
| Sauermolke | 200 | 20 |
| Gesamtmasse des resultierenden Artikels | 1000 | |

**Tabelle 4: Beispielrezeptur 4**

| Beispielrezeptur 4 | | |
|---|---|---|
| | Masse [kg] | Anteil [Gew.-%] |
| Vorbehandeltes Laub | 500 | 50 |
| Flüssiger Gärrest aus einer Biogasanlage | 500 | 50 |
| Gesamtmasse des resultierenden Artikels | 1000 | |

**Tabelle 5: Beispielrezeptur 5**

| Beispielrezeptur 5 | | |
|---|---|---|
| | Masse [kg] | Anteil [Gew.-%] |
| Vorbehandeltes Laub | 500 | 50 |
| Flüssiger Gärrest aus einer Biogasanlage | 500 | 50 |
| Gesamtmasse des resultierenden Artikels | 1000 | |

**Tabelle 6: Beisielrezetur 6**

| Beispielrezeptur 6 | | |
|---|---|---|
| | Masse [kg] | Anteil [Gew.-%] |
| Vorbehandeltes Laub | 400 | 40 |
| Flüssiger Gärrest aus einer Biogasanlage | 600 | 60 |
| Gesamtmasse des resultierenden Artikels | 1000 | |

**Tabelle 7: Beispielrezeptur 7**

| Beispielrezeptur 7 | | |
|---|---|---|
| | Masse [kg] | Anteil [Gew.-%] |
| Vorbehandeltes Laub | 400 | 40 |
| Flüssiger Gärrest aus einer Biogasanlage | 600 | 60 |
| Gesamtmasse des resultierenden Artikels | 1000 | |

**Tabelle 8: Beispielrezeptur 8**

| Beispielrezeptur 8 | | |
|---|---|---|
| | Masse [kg] | Anteil [Gew.-%] |
| Vorbehandeltes Laub | 400 | 40 |
| Flüssiger Gärrest aus einer Biogasanlage | 500 | 50 |
| Sauermolke | 100 | 10 |
| Gesamtmasse des resultierenden Artikels | 1000 | |

**Tabelle 9: Beispielrezeptur 9**

| Beispielrezeptur 9 | | |
|---|---|---|
| | Masse [kg] | Anteil [Gew.-%] |
| Vorbehandeltes Laub | 400 | 40 |
| Flüssiger Gärrest aus einer Biogasanlage | 400 | 40 |
| Sauermolke | 200 | 20 |
| Gesamtmasse des resultierenden Artikels | 1000 | |

**Tabelle 10: Beispielrezeptur 10**

| Beispielrezeptur 10 | | |
|---|---|---|
| | Masse [kg] | Anteil [Gew.-%] |
| Vorbehandeltes Laub | 450 | 45 |
| Flüssiger Gärrest aus einer Biogasanlage | 550 | 55 |
| Gesamtmasse des resultierenden Artikels | 1000 | |

**Tabelle 11: Beispielrezeptur 11**

| Beispielrezeptur 11 | | |
|---|---|---|
| | Masse [kg] | Anteil [Gew.-%] |
| Vorbehandeltes Laub | 450 | 45 |
| Flüssiger Gärrest aus einer Biogasanlage | 450 | 45 |
| Sauermolke | 100 | 10 |
| Gesamtmasse des resultierenden Artikels | 1000 | |

**Tabelle 12: Beispielrezeptur 12**

| Beispielrezeptur 12 | | |
|---|---|---|
| | Masse [kg] | Anteil [Gew.-%] |
| Vorbehandeltes Laub | 460 | 46 |
| Flüssiger Gärrest aus einer Biogasanlage | 320 | 32 |
| Leitungswasser | 220 | 22 |
| Gesamtmasse des resultierenden Artikels | 1000 | |

**Tabelle 13: Beispielrezeptur 13**

| Beispielrezeptur 13 | | |
|---|---|---|
| | Masse [kg] | Anteil [Gew.-%] |
| Vorbehandeltes Laub | 450 | 45 |
| Flüssiger Gärrest aus einer Biogasanlage | 450 | 45 |
| Sauermolke | 100 | 10 |
| Gesamtmasse des resultierenden Artikels | 1000 | |

**Tabelle 14: Beispielrezeptur 14**

| Beispielrezeptur 14 | | |
|---|---|---|
| | Masse [kg] | Anteil [Gew.-%] |
| Vorbehandeltes Laub | 450 | 45 |
| Flüssiger Gärrest aus einer Biogasanlage | 550 | 55 |
| Gesamtmasse des resultierenden Artikels | 1000 | |

**Tabelle 15: Beispielrezeptur 15**

| Beispielrezeptur 15 | | |
|---|---|---|
| | Masse [kg] | Anteil [Gew.-%] |
| Vorbehandeltes Laub | 400 | 40 |
| Flüssiger Gärrest aus einer Biogasanlage | 500 | 50 |
| Sauermolke | 100 | 10 |
| Gesamtmasse des resultierenden Artikels | 1000 | |

**Tabelle 16: Beispielrezeptur 16**

| Beispielrezeptur 16 | | |
|---|---|---|
| | Masse [kg] | Anteil [Gew.-%] |
| Vorbehandeltes Laub | 400 | 40 |
| Flüssiger Gärrest aus einer Biogasanlage | 400 | 40 |
| Sauermolke | 20 | 20 |
| Gesamtmasse des resultierenden Artikels | 1000 | |

**Tabelle 17: Beispielrezeptur 17**

| Beispielrezeptur 17 | | |
|---|---|---|
| | Masse [kg] | Anteil [Gew.-%] |
| Vorbehandeltes Laub | 400 | 40 |
| Flüssiger Gärrest aus einer Biogasanlage | 400 | 40 |
| Sauermolke | 20 | 20 |
| Gesamtmasse des resultierenden Artikels | 1000 | |

**Tabelle 18B: Beispielrezeptur 18**

| Beispielrezeptur 18 | | |
|---|---|---|
| | Masse [kg] | Anteil [Gew.-%] |
| Vorbehandeltes Laub | 230 | 23 |
| Flüssiger Gärrest aus einer Biogasanlage | 700 | 70 |
| Zitronensäure | 70 | 7 |
| Gesamtmasse des resultierenden Artikels | 1000 | |

**Tabelle 19B: Beispielrezeptur 19**

| Beispielrezeptur 19 | | |
|---|---|---|
| | Masse [kg] | Anteil [Gew.-%] |
| Vorbehandeltes Laub | 240 | 24 |
| Flüssiger Gärrest aus einer Biogasanlage | 710 | 71 |
| Schwefelsäure (98,3%) | 50 | 5 |
| Gesamtmasse des resultierenden Artikels | 1000 | |

**Tabelle 20B: Beispielrezeptur 20**

| Beispielrezeptur 20 | | |
|---|---|---|
| | Masse [kg] | Anteil [Gew.-%] |
| Vorbehandeltes Laub | 170 | 17 |
| Flüssiger Gärrest aus einer Biogasanlage | 500 | 50 |
| Panseninhalt | 330 | 33 |
| Gesamtmasse des resultierenden Artikels | 1000 | |

**Tabelle 21B: Beispielrezeptur 21**

| Beispielrezeptur 21 | | |
|---|---|---|
| | Masse [kg] | Anteil [Gew.-%] |
| Vorbehandeltes Laub | 200 | 20 |
| Flüssiger Gärrest aus einer Biogasanlage | 600 | 60 |
| Panseninhalt | 200 | 20 |
| Gesamtmasse des resultierenden Artikels | 1000 | |

**Tabelle 22B: Beispielrezeptur 22**

| Beispielrezeptur 22 | | |
|---|---|---|
| | Masse [kg] | Anteil [Gew.-%] |
| Vorbehandeltes Laub | 220 | 22 |
| Flüssiger Gärrest aus einer Biogasanlage | 650 | 65 |
| Tannennadeln | 130 | 13 |
| Gesamtmasse des resultierenden Artikels | 1000 | |

**Tabelle 23B: Beisoielrezeotur 23**

| Beispielrezeptur 23 | | |
|---|---|---|
| | Masse [kg] | Anteil [Gew.-%] |
| Vorbehandeltes Laub | 240 | 24 |
| Flüssiger Gärrest aus einer Biogasanlage | 380 | 38 |
| Sauermolke | 380 | 38 |
| Gesamtmasse des resultierenden Artikels | 1000 | |

**Tabelle 24B: Beispielrezeptur 24**

| Beispielrezeptur 24 | | |
|---|---|---|
| | Masse [kg] | Anteil [Gew.-%] |
| Vorbehandeltes Laub | 200 | 20 |
| Flüssiger Gärrest aus einer Biogasanlage | 600 | 60 |
| Sauermolke | 200 | 20 |
| Gesamtmasse des resultierenden Artikels | 1000 | |

**Tabelle 25B: Beispielrezeptur 25**

| Beispielrezeptur 25 | | |
|---|---|---|
| | Masse [kg] | Anteil [Gew.-%] |
| Vorbehandeltes Laub | 190 | 19 |
| Flüssiger Gärrest aus einer Biogasanlage | 370 | 37 |
| Sauermolke | 180 | 18 |
| Panseninhalt | 260 | 26 |
| Gesamtmasse des resultierenden Artikels | 1000 | |

**Tabelle 26B: Beispielrezeptur 26**

| Beispielrezeptur 26 | | |
|---|---|---|
| | Masse [kg] | Anteil [Gew.-%] |
| Vorbehandeltes Laub | 500 | 50 |
| Flüssiger Gärrest aus einer Biogasanlage | 300 | 30 |
| Leitungswasser | 200 | 20 |
| Gesamtmasse des resultierenden Artikels | 1000 | |

**Tabelle 27B: Beispielrezeptur 27**

| Beispielrezeptur 27 | | |
|---|---|---|
| | Masse [kg] | Anteil [Gew.-%] |
| Vorbehandeltes Laub | 450 | 45 |
| Flüssiger Gärrest aus einer Biogasanlage | 550 | 55 |
| Gesamtmasse des resultierenden Artikels | 1000 | |

**Tabelle 28B: Beispielrezeptur 28**

| Beispielrezeptur 28 | | |
|---|---|---|
| | Masse [kg] | Anteil [Gew.-%] |
| Vorbehandeltes Laub | 400 | 40 |
| Flüssiger Gärrest aus einer Biogasanlage | 500 | 50 |
| Sauermolke | 100 | 10 |
| Gesamtmasse des resultierenden Artikels | 1000 | |

**Tabelle 29B: Beisoielrezeotur 29**

| Beispielrezeptur 29 | | |
|---|---|---|
| | Masse [kg] | Anteil [Gew.-%] |
| Vorbehandeltes Laub | 450 | 45 |
| Schweinegülle | 450 | 45 |
| Sauermolke | 100 | 10 |
| Gesamtmasse des resultierenden Artikels | 1000 | |

**Tabelle 30B: Beispielrezeptur 30**

| Beispielrezeptur 30 | | |
|---|---|---|
| | Masse [kg] | Anteil [Gew.-%] |
| Vorbehandeltes Laub | 450 | 45 |
| Flüssiger Gärrest aus einer Biogasanlage | 550 | 55 |
| Gesamtmasse des resultierenden Artikels | 1000 | |

**Tabelle 31B: Beispielrezeptur 31**

| Beispielrezeptur 31 | | |
|---|---|---|
| | Masse [kg] | Anteil [Gew.-%] |
| Vorbehandeltes Laub | 400 | 40 |
| Flüssiger Gärrest aus einer Biogasanlage | 500 | 50 |
| Sauermolke | 100 | 10 |
| Gesamtmasse des resultierenden Artikels | 1000 | |

**Tabelle 32B: Beispielrezeptur 32**

| Beispielrezeptur 32 | | |
|---|---|---|
| | Masse [kg] | Anteil [Gew.-%] |
| Vorbehandeltes Laub | 450 | 45 |
| Schweinegülle | 450 | 45 |
| Sauermolke | 100 | 10 |
| Gesamtmasse des resultierenden Artikels | 1000 | |

**Tabelle 33B: Beispielrezeptur 33**

| Beispielrezeptur 33 | | |
|---|---|---|
| | Masse [kq] | Anteil [Gew.-%] |
| Vorbehandeltes Laub | 500 | 50 |
| Weizenschlempe | 500 | 50 |
| Gesamtmasse des resultierenden Artikels | 1000 | |

**Tabelle 34B: Beispielrezeptur 34**

| Beispielrezeptur 34 | | |
|---|---|---|
| | Masse [kg] | Anteil [Gew.-%] |
| Vorbehandeltes Laub | 500 | 50 |
| Weizenschlempe | 500 | 50 |
| Gesamtmasse des resultierenden Artikels | 1000 | |

**Tabelle 35B: Beispielrezeptur 35**

| Beispielrezeptur 35 | | |
|---|---|---|
| | Masse [kg] | Anteil [Gew.-%] |
| Vorbehandeltes Laub | 500 | 50 |
| Sauermolke | 500 | 50 |
| Gesamtmasse des resultierenden Artikels | 1000 | |

**Tabelle 36B: Beispielrezeptur 36**

| Beispielrezeptur 36 | | |
|---|---|---|
| | Masse [kg] | Anteil [Gew.-%] |
| Vorbehandeltes Laub | 500 | 50 |
| Sauermolke | 500 | 50 |
| Gesamtmasse des resultierenden Artikels | 1000 | |

**Tabelle 37B: Beispielrezeptur 37**

| Beispielrezeptur 37 | | |
|---|---|---|
| | Masse [kg] | Anteil [Gew.-%] |
| Vorbehandeltes Laub | 500 | 50 |
| Sauermolke | 500 | 50 |
| Gesamtmasse des resultierenden Artikels | 1000 | |

**Tabelle 38B: Beispielrezeptur 38**

| Beispielrezeptur 38 | | |
|---|---|---|
| | Masse [kg] | Anteil [Gew.-%] |
| Vorbehandeltes Laub | 500 | 50 |
| Sauermolke | 500 | 50 |
| Gesamtmasse des resultierenden Artikels | 1000 | |

**Tabelle 39B: Beispielrezeptur 39**

| Beispielrezeptur 39 | | |
|---|---|---|
| | Masse [kg] | Anteil [Gew.-%] |
| Vorbehandeltes Laub | 500 | 50 |
| Sauermolke, nanofiltriert | 500 | 50 |
| Gesamtmasse des resultierenden Artikels | 1000 | |

**Tabelle 40B: Beispielrezeptur 40**

| Beispielrezeptur 40 | | |
|---|---|---|
| | Masse [kg] | Anteil [Gew.-%] |
| Vorbehandeltes Laub | 500 | 50 |
| Sauermolke, nanofiltriert | 500 | 50 |
| Gesamtmasse des resultierenden Artikels | 1000 | |

**Tabelle 41B: Beispielrezeptur 41**

| Beispielrezeptur 41 | | |
|---|---|---|
| | Masse [kg] | Anteil [Gew.-%] |
| Vorbehandeltes Laub | 500 | 50 |
| Sauermolke, nanofiltriert | 500 | 50 |
| Gesamtmasse des resultierenden Artikels | 1000 | |

**Tabelle 42B: Beispielrezeptur 42**

| Beispielrezeptur 42 | | |
|---|---|---|
| | Masse [kg] | Anteil [Gew.-%] |
| Vorbehandeltes Laub | 500 | 50 |
| Sauermolke, nanofiltriert | 250 | 25 |
| Schweinegülle | 250 | 25 |
| Gesamtmasse des resultierenden Artikels | 1000 | |

**Tabelle 43B: Beispielrezeptur 43**

| Beispielrezeptur 43 | | |
|---|---|---|
| | Masse [kg] | Anteil [Gew.-%] |
| Vorbehandeltes Laub | 500 | 50 |
| Sauermolke, nanofiltriert | 250 | 25 |
| Schweinegülle | 250 | 25 |
| Gesamtmasse des resultierenden Artikels | 1000 | |

**Tabelle 44B: Beispielrezeptur 44**

| Beispielrezeptur 44 | | |
|---|---|---|
| | Masse [kg] | Anteil [Gew.-%] |
| Vorbehandeltes Laub | 500 | 50 |
| Sauermolke, nanofiltriert | 250 | 25 |
| Schweinegülle | 250 | 25 |
| Gesamtmasse des resultierenden Artikels | 1000 | |

**Tabelle 45B: Beispielrezeptur 45**

| Beispielrezeptur 45 | | |
|---|---|---|
| | Masse [kg] | Anteil [Gew.-%] |
| Vorbehandeltes Laub | 500 | 50 |
| Sauermolke, nanofiltriert | 250 | 25 |
| Schweinegülle | 250 | 25 |
| Gesamtmasse des resultierenden Artikels | 1000 | |

**Tabelle 46B: Beispielrezeptur 46**

| Beispielrezeptur 46 | | |
|---|---|---|
| | Masse [kg] | Anteil [Gew.-%] |
| Vorbehandeltes Laub | 500 | 50 |
| Flüssiger Gärrest aus einer Biogasanlage | 250 | 25 |
| Sauermolke | 250 | 25 |
| Gesamtmasse des resultierenden Artikels | 1000 | |

**Tabelle 47B: Beisoielrezeotur 47**

| Beispielrezeptur 47 | | |
|---|---|---|
| | Masse [kg] | Anteil [Gew.-%] |
| Vorbehandeltes Laub | 500 | 50 |
| Flüssiger Gärrest aus einer Biogasanlage | 250 | 25 |
| Sauermolke | 250 | 25 |
| Gesamtmasse des resultierenden Artikels | 1000 | |

**Tabelle 48B: Beispielrezeptur 48**

| Beispielrezeptur 48 | | |
|---|---|---|
| | Masse [kg] | Anteil [Gew.-%] |
| Vorbehandeltes Laub | 500 | 40 |
| Flüssiger Gärrest aus einer Biogasanlage | 500 | 40 |
| Viehwageneinstreu aus Sägemehl von Nadelhölzern mit Resten von tierischem Kot und Urin | 250 | 20 |
| Gesamtmasse des resultierenden Artikels | 1250 | |

**Tabelle 49B: Beispielrezeptur 49**

| Beispielrezeptur 49 | | |
|---|---|---|
| | Masse [kg] | Anteil [Gew.-%] |
| Vorbehandeltes Laub | 500 | 40 |
| Flüssiger Gärrest aus einer Biogasanlage | 500 | 40 |
| Viehwageneinstreu aus Sägemehl von Nadelhölzern mit Resten von tierischem Kot und Urin | 250 | 20 |
| Gesamtmasse des resultierenden Artikels | 1250 | |

**Tabelle 50B: Beispielrezeptur 50**

| Beispielrezeptur 50 | | |
|---|---|---|
| | Masse [kg] | Anteil [Gew.-%] |
| Vorbehandeltes Laub | 500 | 40 |
| Flüssiger Gärrest aus einer Biogasanlage | 500 | 40 |
| Viehwageneinstreu aus Sägemehl von Nadelhölzern mit Resten von tierischem Kot und Urin | 250 | 20 |
| Gesamtmasse des resultierenden Artikels | 1250 | |

### Beispiel C - Erfindungsgemäße Herstellung von Artikeln zur Verwendung im Pflanzenbau

Die nachfolgende beschriebene Vorgehensweise ist lediglich beispielhaft. Auch andere Ausgestaltungen des erfindungsgemäßen Verfahrens können durchgeführt werden.

Die gemäß den Beispielrezepturen Beispielrezeptur 1, Beispielrezeptur 2, Beispielrezeptur 3, Beispielrezeptur 4, Beispielrezeptur 5, Beispielrezeptur 6, Beispielrezeptur 7, Beispielrezeptur 8. Beispielrezeptur 9, Beispielrezeptur 10, Beispielrezeptur 11, Beispielrezeptur 12, Beispielrezeptur 13, Beispielrezeptur 14, Beispielrezeptur 15, Beispielrezeptur 16 und Beispielrezeptur 17 aus obigem Beispiel B bereitgestellten vordefinierten Mengen von vorbehandeltem Laub und den näher bezeichneten Zuschlagstoffen wurden mit Hilfe eines Schneckenmischers über einen Zeitraum von 5 Minuten miteinander vermischt so dass jeweils ein Artikel zur Verwendung im Pflanzenbau resultierte.

Die gemäß den Beispielrezepturen Beispielrezeptur 18, Beispielrezeptur 19, Beispielrezeptur 20, Beispielrezeptur 21, Beispielrezeptur 22, Beispielrezeptur 23, Beispielrezeptur 24, Beispielrezeptur 25, Beispielrezeptur 26, Beispielrezeptur 27, Beispielrezeptur 28, Beispielrezeptur 29, Beispielrezeptur 30, Beispielrezeptur 31, Beispielrezeptur 32, Beispielrezeptur 33, Beispielrezeptur 34, Beispielrezeptur 35, Beispielrezeptur 36, Beispielrezeptur 37, Beispielrezeptur 38, Beispielrezeptur 39, Beispielrezeptur 40, Beispielrezeptur 41, Beispielrezeptur 42, Beispielrezeptur 43, Beispielrezeptur 44, Beispielrezeptur 45, Beispielrezeptur 46, Beispielrezeptur 47, Beispielrezeptur 48, Beispielrezeptur 49 und Beispielrezeptur 50 aus obigem Beispiel B bereitgestellten vordefinierten Mengen von vorbehandeltem Laub und den näher bezeichneten Zuschlagstoffen wurden mit Hilfe eines Schneckenmischers über einen Zeitraum von 5 Minuten miteinander vermischt so dass jeweils ein Artikel zur Verwendung im Pflanzenbau resultierte.

### Beispiel D - Hygienisierung

Die gemäß Beispielrezepturen Beispielrezeptur 3, Beispielrezeptur 5, Beispielrezeptur 7, Beispielrezeptur 8, Beispielrezeptur 9, Beispielrezeptur 11, Beispielrezeptur 12, Beispielrezeptur 13, Beispielrezeptur 15 und Beispielrezeptur 16 hergestellten Artikel zur Verwendung im Pflanzenbau wurden hygienisiert. Dazu wurden sie innerhalb von 8 Stunden auf eine Temperatur im Bereich von 70 °C bis 77 °C erwärmt und nach Erreichen des Temperaturbereichs jeweils für mehr als 1 Stunde bei über 70 °C gehalten, so dass eine Hygienisierung im Sinne einer Pasteurisierung gemäß Anhang 2 Nummer 2.2.1 der "Bioabfallverordnung in der Fassung der Bekanntmachung vom 4. April 2013 (BGBI. I S. 658), die zuletzt durch Artikel 1 der Verordnung vom 28. April 2022 (BGBI. I S. 700) geändert worden ist" erfolgte. Danach kühlten die hergestellten Artikel zur Verwendung im Pflanzenbau jeweils durch Wärmeabgabe an die Umgebungsluft ab, ohne dass weitere Unterstützungsmaßnahmen zum Abkühlen durchgeführt wurden.

Die gemäß Beispielrezepturen Beispielrezeptur 26, Beispielrezeptur 27, Beispielrezeptur 28, Beispielrezeptur 29, Beispielrezeptur 30, Beispielrezeptur 31 und Beispielrezeptur 32 hergestellten Artikel zur Verwendung im Pflanzenbau wurden hygienisiert. Dazu wurden sie innerhalb von 8 Stunden auf eine Temperatur im Bereich von 70 °C bis 77 °C erwärmt und nach Erreichen des Temperaturbereichs jeweils für mehr als 1 Stunde bei über 70 °C gehalten, so dass eine Hygienisierung im Sinne einer Pasteurisierung gemäß Anhang 2 Nummer 2.2.1 der "Bioabfallverordnung in der Fassung der Bekanntmachung vom 4. April 2013 (BGBI. I S. 658), die zuletzt durch Artikel 1 der Verordnung vom 28. April 2022 (BGBI. I S. 700) geändert worden ist" erfolgte. Danach kühlten die hergestellten Artikel zur Verwendung im Pflanzenbau jeweils durch Wärmeabgabe an die Umgebungsluft ab, ohne dass weitere Unterstützungsmaßnahmen zum Abkühlen durchgeführt wurden.

### Beispiel E - Ergebnisse von Analysen

Die gemäß den obigen Beispielrezepturen Beispielrezeptur 1, Beispielrezeptur 2, Beispielrezeptur 3, Beispielrezeptur 4, Beispielrezeptur 5, Beispielrezeptur 6, Beispielrezeptur 7, Beispielrezeptur 8. Beispielrezeptur 9, Beispielrezeptur 10, Beispielrezeptur 11, Beispielrezeptur 12, Beispielrezeptur 13, Beispielrezeptur 14, Beispielrezeptur 15, Beispielrezeptur 16 und Beispielrezeptur 17 gemäß der Vorgehensweise aus obigem Beispiel C hergestellten Artikel zur Verwendung im Pflanzenbau wurden jeweils analysiert. Dabei wurden von Beispielrezeptur 3, Beispielrezeptur 5, Beispielrezeptur 7, Beispielrezeptur 8, Beispielrezeptur 9, Beispielrezeptur 11, Beispielrezeptur 12, Beispielrezeptur 13, Beispielrezeptur 15 und Beispielrezeptur 16 jeweils die gemäß obigem Beispiel D hygienisierten Artikel zur Verwendung im Pflanzenbau untersucht.

Die gemäß den obigen Beispielrezepturen Beispielrezeptur 18, Beispielrezeptur 19, Beispielrezeptur 20, Beispielrezeptur 21, Beispielrezeptur 22, Beispielrezeptur 23, Beispielrezeptur 24, Beispielrezeptur 25, Beispielrezeptur 26, Beispielrezeptur 27, Beispielrezeptur 28, Beispielrezeptur 29, Beispielrezeptur 30, Beispielrezeptur 31, Beispielrezeptur 32, Beispielrezeptur 33, Beispielrezeptur 34, Beispielrezeptur 35, Beispielrezeptur 36 , Beispielrezeptur 37, Beispielrezeptur 38, Beispielrezeptur 39, Beispielrezeptur 40, Beispielrezeptur 41, Beispielrezeptur 42, Beispielrezeptur 43, Beispielrezeptur 44, Beispielrezeptur 45, Beispielrezeptur 46, Beispielrezeptur 47, Beispielrezeptur 48, Beispielrezeptur 49 und Beispielrezeptur 50 gemäß der Vorgehensweise aus obigem Beispiel C hergestellten Artikel zur Verwendung im Pflanzenbau wurden jeweils analysiert. Dabei wurden von Beispielrezeptur 26, Beispielrezeptur 27, Beispielrezeptur 28, Beispielrezeptur 29, Beispielrezeptur 30, Beispielrezeptur 31 und Beispielrezeptur 32 jeweils die gemäß obigem Beispiel D hygienisierten Artikel zur Verwendung im Pflanzenbau untersucht.

Soweit nicht im Einzelnen explizit abweichend angegeben, wurden die Analyseergebnisse gemäß den in nachfolgender Tabelle 18 aufgeführten Methoden ermittelt:

**Tabelle 18: Zuordnung von Analyseparametern zu Messmethoden**

| Analyseparameter | Einheit | Methode |
|---|---|---|
| Trockensubstanz (TS) | % | VDLUFA Methodenbuch Band I, A 2.1.1 1991-01 |
| Rohdichte (feucht), | g/l | VDLUFA Methodenbuch Band I, A 13.2.1 1991-01 |
| Rohdichte (trocken) | g/l | VDLUFA Methodenbuch Band I, A 13.2.1 1991-01 |
| pH-Wert (CaCl2) | | VDLUFA Methodenbuch Band I, A 5.1.1 2016-01 |
| Leitfähigkeit in H₂O | µS/cm | VDLUFA Methodenbuch Band I, A 10.1.1 1991-01 |
| Salz als KCl in H₂O | g/l | VDLUFA Methodenbuch Band I, A 10.1.1 1991-01 |
| Ammonium-Stickstoff (NH₄-N) in CAT | mg/l | VDLUFA Methodenbuch Band I, A 13.1.1 2004-01 |
| Nitrat-Stickstoff (NO₃-N) in CAT | mg/l | VDLUFA Methodenbuch Band I, A 13.1.1 2004-01 |
| Stickstoff (N) in CAT | mg/l | VDLUFA Methodenbuch Band I, A 13.1.1 2004-01 |
| Phosphor (P₂O₅) in CAT | mg/l | VDLUFA Methodenbuch Band I, A 13.1.1 2004-01 |
| Kalium (K₂O) in CAT | mg/l | VDLUFA Methodenbuch Band I, A 13.1.1 2004-01 |
| Magnesium (Mg) in CAT | mg/l | VDLUFA Methodenbuch Band I, A 13.1.1 2004-01 |
| Bor (B) in CAT | mg/l | VDLUFA Methodenbuch Band I, A 13.1.1 2004-01 |
| Calcium (Ca) in Natriumformiat | mg/l | Extrakt.: Na-Formiat-Lsg. (1+10); Messung: ICP-OES |
| Natrium (Na) in H₂O | mg/l | VDLUFA Methodenbuch Band I, A 13.4.3 2012-01 |
| Chlorid (Cl⁻) in H₂O | mg/l | VDLUFA Methodenbuch Band I, A 13.4.3 2012-01 |
| Sulfat (SO₄) in H₂O | mg/l | in Anlehnung an DIN EN 13652 2002-01 |
| Gesamt organischer Kohlenstoff (TOC) in FS | % | VDLUFA Methodenbuch Band I, A 4.1.3.2 2016-01 |
| Gesamt organischer | | |
| Kohlenstoff (TOC) in TS | % | VDLUFA Methodenbuch Band I, A 4.1.3.2 2016-01 |
| Gesamt-Stickstoff (TN) in FS | % | DIN EN 16168 2012-11 |
| Gesamt-Stickstoff (TN) in TS | % | DIN EN 16168 2012-11 |
| C/N-Verhältnis (TOC/TN) | | Berechnet aus TOC und TN |
| Schwefel (S) in CaCl₂ | mg/l | VDLUFA Methodenbuch Band II.2, 3.7.5 2014-01 |

Solche in der vorstehenden Tabelle 18 genannten Analyseparameter, zu denen vorliegend keine Analyseergebnisse angegeben werden, können gemäß der jeweils in Tabelle 18 angegebenen Methode ermittelt werden.

Die Ergebnisse der Analysen sind in den nachfolgenden Tabellen Tabelle 19, Tabelle 20, Tabelle 21, Tabelle 22, Tabelle 23, Tabelle 23-1, Tabelle 24, Tabelle 24-1, Tabelle 25, Tabelle 26, Tabelle 27, Tabelle 28, Tabelle 29, Tabelle 30, Tabelle 31, Tabelle 32, Tabelle 33, Tabelle 34, Tabelle 35, Tabelle 36, Tabelle 37 und Tabelle 38 angegeben.

Proben zu Beispielrezeptur 1, Beispielrezeptur 2, Beispielrezeptur 3, Beispielrezeptur 4, Beispielrezeptur 5, Beispielrezeptur 6, Beispielrezeptur 7, Beispielrezeptur 8, Beispielrezeptur 10, Beispielrezeptur 11, Beispielrezeptur 12, Beispielrezeptur 16 und Beispielrezeptur 17 wurden eine Woche nach Herstellung des jeweiligen Artikels zur Verwendung im Pflanzenbau entnommen; Proben zu Beispielrezeptur 9, Beispielrezeptur 13, Beispielrezeptur 14 und Beispielrezeptur 15 wurden fünf Wochen nach Herstellung des jeweiligen Artikels zur Verwendung im Pflanzenbau entnommen.

Proben zu Beispielrezeptur 26, Beispielrezeptur 33 Beispielrezeptur 35, Beispielrezeptur 39 und Beispielrezeptur 42 wurden eine Woche nach Herstellung des Artikels zur Verwendung im Pflanzenbau entnommen.

Proben zu Beispielrezeptur 18, Beispielrezeptur 19, Beispielrezeptur 20, Beispielrezeptur 21, Beispielrezeptur 22, Beispielrezeptur 23, Beispielrezeptur 24 und Beispielrezeptur 25, wurden drei Wochen nach Herstellung des jeweiligen Artikels zur Verwendung im Pflanzenbau entnommen.

Proben zu Beispielrezeptur 34, Beispielrezeptur 36, Beispielrezeptur 40 und Beispielrezeptur 43 wurden vier Wochen nach Herstellung des Artikels zur Verwendung im Pflanzenbau entnommen.

Proben zu Beispielrezeptur 48 wurden sechs Wochen nach Herstellung des Artikels zur Verwendung im Pflanzenbau entnommen.

Proben zu Beispielrezeptur 27, Beispielrezeptur 28, Beispielrezeptur 29, Beispielrezeptur 37, Beispielrezeptur 41, Beispielrezeptur 44 und Beispielrezeptur 46 wurden neun Wochen nach Herstellung des jeweiligen Artikels zur Verwendung im Pflanzenbau entnommen.

Proben zu Beispielrezeptur 30, Beispielrezeptur 31, Beispielrezeptur 32, Beispielrezeptur 38, Beispielrezeptur 45, Beispielrezeptur 47 und Beispielrezeptur 49 wurden vierzehn Wochen nach Herstellung des jeweiligen Artikels zur Verwendung im Pflanzenbau entnommen.

Proben zu Beispielrezeptur 50 wurden dreißig Wochen nach Herstellung des Artikels zur Verwendung im Pflanzenbau entnommen.

**Tabelle 19: Analyseergebnisse zu Beispielrezeptur 1, Beispielrezeptur 2 und Beispielrezeptur 3**

| | Artikel zur Verwendung im Pflanzenbau gemäß: | | |
|---|---|---|---|
| | Beispielrezeptur 1 | Beispielrezeptur 2 | Beispielrezeptur 3 |
| Trockensubstanz [%] | 34,1 | 39,4 | 44,7 |
| Rohdichte (feucht) [g/L] | 470 | 345 | 310 |
| pH-Wert in CaCl₂ | 7,2 | 6,2 | 6,7 |
| Salz als KCl in H₂O [g/L] | 2,30 | 3,41 | 2,05 |
| Ammonium-Stickstoff (NH₄-N) in CAT [mg/l] | < 2 | 133 | 88 |
| Phosphor (P2O5) in CAT [mg/L] | 290 | 345 | 334 |
| Kalium (K2O) in CAT [mg/L] | 1.996 | 1509 | 1514 |
| Magnesium (Mg) in CAT [mg/L] | 192 | 152 | 116 |
| Gesamt organischer Kohlenstoff (TOC) in FS [%] | 26 | 28,9 | 31,2 |
| Gesamt organischer Kohlenstoff (TOC) in TS [%] | 78 | 73,2 | 69,6 |
| Gesamt-Stickstoff (TN) in FS [%] | 1 | 0,49 | 0,61 |
| Gesamt-Stickstoff (TN) in TS [%] | 2 | 1,25 | 1,36 |

**Tabelle 20: Analyseergebnisse zu Beispielrezeptur 4 und Beispielrezeptur 5**

| | Artikel zur Verwendung im Pflanzenbau gemäß: | |
|---|---|---|
| | Beispielrezeptur 4 | Beispielrezeptur 5 |
| Trockensubstanz [%] | 50 | 54,4 |
| Rohdichte (feucht) [g/L] | 260 | 205 |
| pH-Wert in CaCl₂ | 7,2 | 6,9 |
| Salz als KCl in H₂O [g/L] | 1,51 | 1,34 |
| Ammonium-Stickstoff (NH4-N) in CAT [mg/l] | 36 | 40 |
| Phosphor (P2O5) in CAT [mg/L] | 182 | 189 |
| Kalium (K2O) in CAT [mg/L] | 1325 | 1124 |
| Magnesium (Mg) in CAT [mg/L] | 98 | 80 |
| Gesamt organischer Kohlenstoff (TOC) in FS [%] | 35,9 | 40,2 |
| Gesamt organischer Kohlenstoff (TOC) in TS [%] | 71,7 | 74 |
| Gesamt-Stickstoff (TN) in FS [%] | 0,73 | 0,76 |
| Gesamt-Stickstoff (TN) in TS [%] | 1,46 | 1,39 |

**Tabelle 21: Analyseergebnisse zu Beispielrezeptur 6, Beispielrezeptur 7 und Beispielrezeptur 8**

| | Artikel zur Verwendung im Pflanzenbau gemäß: | | |
|---|---|---|---|
| | Beispielrezeptur 6 | Beispielrezeptur 7 | Beispielrezeptur 8 |
| Trockensubstanz [%] | 42 | 45,5 | 44,6 |
| Rohdichte (feucht) [g/L] | 350 | 345 | 250 |
| pH-Wert in CaCl₂ | 7,5 | 6,6 | 6,7 |
| Salz als KCl in H₂O [g/L] | 1,83 | 2,12 | 1,38 |
| Ammonium-Stickstoff (NH4-N) in CAT [mg/l] | 81 | 125 | 7 |
| Phosphor (P2O5) in CAT [mg/L] | 203 | 360 | 284 |
| Kalium (K2O) in CAT [mg/L] | 1608 | 1767 | 1325 |
| Magnesium (Mg) in CAT [mg/L] | 113 | 124 | 102 |
| Gesamt organischer Kohlenstoff (TOC) in FS [%] | 28,2 | 32,1 | 15,1 |
| Gesamt organischer Kohlenstoff (TOC) in TS [%] | 67 | 70,7 | 33,9 |
| Gesamt-Stickstoff (TN) in FS [%] | 0,56 | 0,63 | 0,67 |
| Gesamt-Stickstoff (TN) in TS [%] | 1,32 | 1,38 | 1,49 |
| C/N-Verhältnis (TOC/TN) | --- | --- | 23 |

**Tabelle 22: Analyseergebnisse zu Beispielrezeptur 9, Beispielrezeptur 10 und Beispielrezeptur 11**

| | Artikel zur Verwendung im Pflanzenbau gemäß: | | |
|---|---|---|---|
| | Beispielrezeptur 9 | Beispielrezeptur 10 | Beispielrezeptur 11 |
| Trockensubstanz [%] | 41,8 | 45,4 | 37,6 |
| Rohdichte (feucht) [g/L] | 340 | 260 | 320 |
| pH-Wert in CaCl₂ | 7,2 | 7,2 | 7 |
| Salz als KCl in H₂O [g/L] | 1,52 | 1,3 | 1,69 |
| Ammonium-Stickstoff (NH4-N) in CAT [mg/l] | < 2 | < 2 | 94 |
| Phosphor (P2O5) in CAT [mg/L] | 244 | 186 | 288 |
| Kalium (K2O) in CAT [mg/L] | 1644 | 1324 | 1392 |
| Magnesium (Mg) in CAT [mg/L] | 124 | 101 | 115 |
| Gesamt organischer Kohlenstoff (TOC) in FS [%] | 16,6 | 17,6 | 13,9 |
| Gesamt organischer Kohlenstoff (TOC) in TS [%] | 39,8 | 38,8 | 37,1 |
| Gesamt-Stickstoff (TN) in FS [%] | 0,72 | 0,75 | 0,52 |
| Gesamt-Stickstoff (TN) in TS [%] | 1,73 | 1,65 | 1,38 |
| C/N-Verhältnis (TOC/TN) | 23 | 24 | 27 |

**Tabelle 23: Analyseergebnisse zu Beispielrezeptur 12, Beispielrezeptur 13 und Beispielrezeptur 14**

| | Artikel zur Verwendung im Pflanzenbau gemäß: | | |
|---|---|---|---|
| | Beispielrezeptur 12 | Beispielrezeptur 13 | Beispielrezeptur 14 |
| Trockensubstanz [%] | 45,6 | 36,6 | 45,8 |
| Rohdichte (feucht) [g/L] | 295 | 340 | 260 |
| pH-Wert in CaCl₂ | 6,7 | 7,4 | 7,3 |
| Salz als KCl in H₂O [g/L] | 1,45 | 1,56 | 1,29 |
| Ammonium-Stickstoff (NH4-N) in CAT [mg/l] | <2 | <2 | <2 |
| Phosphor (P2O5) in CAT [mg/L] | 261 | 273 | 201 |
| Kalium (K2O) in CAT [mg/L] | 1422 | 1485 | 1365 |
| Magnesium (Mg) in CAT [mg/L] | 127 | 138 | 106 |
| Bor (B) in CAT [mg/L] | --- | 2,3 | 1,9 |
| Chlorid (Cl-) in H2O [mg/L] | 404 | 397 | 385 |
| Sulfat (SO4) in H2O [mg/L] | --- | 47 | 41 |
| Schwefel (S) in CaCl2 [mg/L] | --- | 12 | 10,7 |

**Tabelle 23-1: Weitere Analyseergebnisse zu Beispielrezeptur 12**

| | Artikel zur Verwendung im Pflanzenbau gemäß: | | |
|---|---|---|---|
| | Beispielrezeptur 12 | Beispielrezeptur 13 | Beispielrezeptur 14 |
| Gesamt organischer Kohlenstoff (TOC) in FS [%] | 16,5 | 8,2 | 22,6 |
| Gesamt organischer Kohlenstoff (TOC) in TS [%] | 36,1 | 22,3 | 49,3 |

**Tabelle 24: Analyseergebnisse zu Beispielrezeptur 15, Beispielrezeptur 16 und Beispielrezeptur 17**

| | Artikel zur Verwendung im Pflanzenbau gemäß: | | |
|---|---|---|---|
| | Beispielrezeptur 15 | Beispielrezeptur 16 | Beispielrezeptur 17 |
| Trockensubstanz [%] | 41,4 | 35,9 | 34,9 |
| Rohdichte (feucht) [g/L] | 325 | 305 | 310 |
| pH-Wert in CaCl₂ | 7,1 | 6,7 | 7,1 |
| Salz als KCl in H₂O [g/L] | 1,73 | 1,73 | 1,64 |
| Ammonium-Stickstoff (NH4-N) in CAT [mg/l] | < 2 | 23 | 8 |
| Phosphor (P2O5) in CAT [mg/L] | 331 | 295 | 230 |
| Kalium (K2O) in CAT [mg/L] | 1680 | 1353 | 1381 |
| Magnesium (Mg) in CAT [mg/L] | 131 | 134 | 131 |
| Bor (B) in CAT [mg/L] | 2,7 | 2,8 | 2,1 |
| Chlorid (Cl-) in H2O [mg/L] | 472 | 407 | 421 |
| Sulfat (SO4) in H2O [mg/L] | 60 | 146 | 133 |
| Schwefel (S) in CaCl2 [mg/L] | 14,9 | 42,1 | 39,3 |

**Tabelle 24-1: Weitere Analyseergebnisse zu Beispielrezeptur 16 und Beispielrezeptur 17**

| | Artikel zur Verwendung im Pflanzenbau gemäß: | | |
|---|---|---|---|
| | Beispielrezeptur 15 | Beispielrezeptur 16 | Beispielrezeptur 17 |
| Gesamt organischer Kohlenstoff (TOC) in FS [%] | 14,4 | 14,4 | 14,2 |
| Gesamt organischer Kohlenstoff (TOC) in TS [%] | 34,7 | 40,1 | 40,6 |

**Tabelle 25: Analyseergebnisse zu Beispielrezeptur 18, Beispielrezeptur 19 und Beispielrezeptur 20**

| | Artikel zur Verwendung im Pflanzenbau gemäß: | | |
|---|---|---|---|
| | Beispielrezeptur 18 | Beispielrezeptur 19 | Beispielrezeptur 20 |
| Trockensubstanz [%] | 31,3 | 30,6 | 24,1 |
| Rohdichte (feucht) [g/L] | 410 | 470 | 475 |
| pH-Wert in CaCl₂ | 4,6 | 1,8 | 8 |
| Salz als KCl in H₂O [g/L] | 5,5 | 21,84 | 3,03 |
| Ammonium-Stickstoff (NH4-N) in CAT [mg/l] | 186 | 681 | 160 |
| Phosphor (P2O5) in CAT [mg/L] | 390 | 826 | 385 |
| Kalium (K2O) in CAT [mg/L] | 1800 | 2310 | 1838 |
| Magnesium (Mg) in CAT [mg/L] | 217 | 344 | 135 |
| Gesamt organischer Kohlenstoff (TOC) in FS [%] | 24,4 | 23,4 | 18,5 |
| Gesamt organischer Kohlenstoff (TOC) in TS [%] | 77,9 | 76,7 | 76,9 |
| Gesamt-Stickstoff (TN) in FS [%] | 0,47 | 0,53 | 0,46 |
| Gesamt-Stickstoff (TN) in TS [%] | 1,49 | 1,74 | 1,89 |

**Tabelle 26: Analyseergebnisse zu Beispielrezeptur 21, Beispielrezeptur 22 und Beispielrezeptur 23**

| | Artikel zur Verwendung im Pflanzenbau gemäß: | | |
|---|---|---|---|
| | Beispielrezeptur 21 | Beispielrezeptur 22 | Beispielrezeptur 23 |
| Trockensubstanz [%] | 26,2 | 34,4 | 27 |
| Rohdichte (feucht) [g/L] | 425 | 410 | 475 |
| pH-Wert in CaCl₂ | 7,9 | 7,7 | 7,8 |
| Salz als KCl in H₂O [g/L] | 2,79 | 2,31 | 2,91 |
| Ammonium-Stickstoff (NH4-N) in CAT [mg/l] | 66 | 128 | 40 |
| Phosphor (P2O5) in CAT [mg/L] | 273 | 221 | 363 |
| Kalium (K2O) in CAT [mg/L] | 1844 | 1553 | 2054 |
| Magnesium (Mg) in CAT [mg/L] | 118 | 117 | 149 |
| Gesamt organischer Kohlenstoff (TOC) in FS [%] | 20,6 | 26,1 | 21,1 |
| Gesamt organischer Kohlenstoff (TOC) in TS [%] | 78,5 | 75,8 | 78,2 |
| Gesamt-Stickstoff (TN) in FS [%] | 0,47 | 0,48 | 0,44 |
| Gesamt-Stickstoff (TN) in TS [%] | 1,79 | 1,4 | 1,64 |

**Tabelle 27: Analyseergebnisse zu Beispielrezeptur 24, Beispielrezeptur 25 und Beispielrezeptur 26**

| | Artikel zur Verwendung im Pflanzenbau gemäß: | | |
|---|---|---|---|
| | Beispielrezeptur 24 | Beispielrezeptur 25 | Beispielrezeptur 26 |
| Trockensubstanz [%] | 28,2 | 22,1 | 44,3 |
| Rohdichte (feucht) [g/L] | 420 | 625 | 270 |
| pH-Wert in CaCl₂ | 7,7 | 8 | 6,4 |
| Salz als KCl in H₂O [g/L] | 2,29 | 4,15 | 1,61 |
| Ammonium-Stickstoff (NH4-N) in CAT [mg/l] | 3 | 130 | 41 |
| Phosphor (P2O5) in CAT [mg/L] | 253 | 361 | 277 |
| Kalium (K2O) in CAT [mg/L] | 1918 | 2364 | 1235 |
| Magnesium (Mg) in CAT [mg/L] | 134 | 145 | 148 |
| Gesamt organischer Kohlenstoff (TOC) in FS [%] | 22,7 | 16,4 | -- |
| Gesamt organischer Kohlenstoff (TOC) in TS [%] | 80,6 | 74,3 | -- |
| Gesamt-Stickstoff (TN) in FS [%] | 0,48 | 0,37 | 0,56 |
| Gesamt-Stickstoff (TN) in TS [%] | 1,7 | 1,67 | 1,26 |

**Tabelle 28: Analyseergebnisse zu Beispielrezeptur 24, Beispielrezeptur 25 und Beispielrezeptur 26**

| | Artikel zur Verwendung im Pflanzenbau gemäß: |
|---|---|
| | Beispielrezeptur 26 |
| C/N-Verhältnis (TOC/TN) | 31 |
| Bor (B) in CAT [mg/l] | 2,8 |
| Chlorid (Cl⁻) in H₂O [mg/l] | 373 |
| Sulfat (SO₄) in H₂O [mg/l] | 133 |
| Gesamt organischer Kohlenstoff (TOC) in FS [%] | 17,5 |
| Gesamt organischer Kohlenstoff (TOC) in TS [%] | 39,6 |
| Schwefel (S) in CaCl₂ [mg/l] | 47 |
| Natrium (Na) in H₂O [mg/l] | 51 |
| Calcium (Ca) in Natriumformiat [mg/l] | 1169 |

**Tabelle 29: Analyseergebnisse zu Beispielrezeptur 27, Beispielrezeptur 28 und Beispielrezeptur 29**

| | Artikel zur Verwendung im Pflanzenbau gemäß: | | |
|---|---|---|---|
| | Beispielrezeptur 27 | Beispielrezeptur 28 | Beispielrezeptur 29 |
| Trockensubstanz [%] | 45,2 | 41,6 | 38,5 |
| Rohdichte (feucht) [g/L] | 310 | 310 | 355 |
| pH-Wert in CaCl₂ | 7,3 | 7 | 7,4 |
| Salz als KCl in H₂O [g/L] | 1,64 | 1,73 | 1,71 |
| Ammonium-Stickstoff (NH4-N) in CAT [mg/l] | <2 | <2 | <2 |
| Phosphor (P2O5) in CAT [mg/L] | 218 | 286 | 259 |
| Kalium (K2O) in CAT [mg/L] | 1693 | 1604 | 1687 |
| Magnesium (Mg) in CAT [mg/L] | 127 | 128 | 145 |
| Chlorid (Cl⁻) in H₂O [mg/l] | 489 | 481 | 467 |
| Sulfat (SO₄) in H₂O [mg/l] | 37 | 37 | 32 |
| Schwefel (S) in CaCl2 [mg/l] | 11,73 | 1066 | 8,9 |
| Natrium (Na) in H2O [mg/l] | 64 | 72 | 75 |

**Tabelle 30: Analyseergebnisse zu Beispielrezeptur 30, Beispielrezeptur 31 und Beispielrezeptur 32**

| | Artikel zur Verwendung im Pflanzenbau gemäß: | | |
|---|---|---|---|
| | Beispielrezeptur 30 | Beispielrezeptur 31 | Beispielrezeptur 32 |
| Trockensubstanz [%] | 45,1 | 43,8 | 37,6 |
| Rohdichte (feucht) [g/L] | 142 | 140 | 150 |
| pH-Wert in CaCl₂ | 7,3 | 7,1 | 7,3 |
| Salz als KCl in H₂O [g/L] | 1,5 | 1,68 | 1,74 |
| Ammonium-Stickstoff (NH4-N) in CAT [mg/l] | <2 | <2 | <2 |
| Phosphor (P2O5) in CAT [mg/L] | 200 | 287 | 302 |
| Kalium (K2O) in CAT [mg/L] | 1582 | 1663 | 1787 |
| Magnesium (Mg) in CAT [mg/L] | 120 | 126 | 156 |
| Bor (B) in CAT [mg/l] | 2 | 2,3 | 2,4 |
| Chlorid (Cl⁻) in H₂O [mg/l] | 468 | 505 | 484 |
| Sulfat (SO₄) in H₂O [mg/l] | 30 | 41 | 39 |
| Schwefel (S) in CaCl2 [mg/l] | 9,16 | 11,66 | 10,4 |
| Natrium (Na) in H2O [mg/l] | 91 | 114 | 121 |

**Tabelle 31: Analyseergebnisse zu Beispielrezeptur 33 und Beispielrezeptur 34**

| | Artikel zur Verwendung im Pflanzenbau gemäß: | |
|---|---|---|
| | Beispielrezeptur 33 | Beispielrezeptur 34 |
| Trockensubstanz [%] | 47,9 | 51,6 |
| Rohdichte (feucht) [g/L] | 310 | 360 |
| pH-Wert in CaCl₂ | 6,8 | 6,8 |
| Salz als KCl in H₂O [g/L] | 1,22 | 1,64 |
| Ammonium-Stickstoff (NH4-N) in CAT [mg/l] | <2 | <2 |
| Phosphor (P2O5) in CAT [mg/L] | 266 | 331 |
| Kalium (K2O) in CAT [mg/L] | 980 | 1151 |
| Magnesium (Mg) in CAT [mg/L] | 122 | 148 |
| Chlorid (Cl⁻) in H₂O [mg/l] | 360 | 420 |
| Sulfat (SO₄) in H₂O [mg/l] | 35 | 34 |
| Natrium (Na) in H2O [mg/l] | 123 | 141 |

**Tabelle 32: Analyseergebnisse zu Beispielrezeptur 35 und Beispielrezeptur 36**

| | Artikel zur Verwendung im Pflanzenbau gemäß: | |
|---|---|---|
| | Beispielrezeptur 35 | Beispielrezeptur 36 |
| Trockensubstanz [%] | 45,2 | 48,5 |
| Rohdichte (feucht) [g/L] | 250 | 225 |
| pH-Wert in CaCl₂ | 5,2 | 6,8 |
| Salz als KCl in H₂O [g/L] | 2,18 | 1,05 |
| Ammonium-Stickstoff (NH4-N) in CAT [mg/l] | <2 | <2 |
| Phosphor (P2O5) in CAT [mg/L] | 338 | 283 |
| Kalium (K2O) in CAT [mg/L] | 767 | 766 |
| Magnesium (Mg) in CAT [mg/L] | 117 | 82 |
| Gesamt-Stickstoff (TN) in FS [%] | 0,54 | 0,59 |
| Gesamt-Stickstoff (TN) in TS [%] | 1,2 | 1,22 |
| C/N-Verhältnis (TOC/TN) | 28 | |
| Bor (B) in CAT [mg/L] | 1,9 | 1,3 |
| Chlorid (Cl⁻) in H₂O [mg/l] | 272 | 308 |
| Sulfat (SO₄) in H₂O [mg/l] | 44 | 26 |
| Gesamt organischer Kohlenstoff (TOC) in FS [%] | 15,4 | |
| Gesamt organischer Kohlenstoff (TOC) in FS [%] | 34,1 | |
| | 17,14 | |
| Schwefel (S) in CaCl₂ [mg/l] | | |
| Natrium (Na) in H₂O [mg/l] | 108 | 104 |

**Tabelle 33: Analyseergebnisse zu Beispielrezeptur 37 und Beispielrezeptur 38**

| | Artikel zur Verwendung im Pflanzenbau gemäß: | |
|---|---|---|
| | Beispielrezeptur 37 | Beispielrezeptur 38 |
| Trockensubstanz [%] | 42 | 39,3 |
| Rohdichte (feucht) [g/L] | 305 | 350 |
| pH-Wert in CaCl₂ | 7,1 | 7,1 |
| Salz als KCl in H₂O [g/L] | 1,05 | 1,22 |
| Ammonium-Stickstoff (NH4-N) in CAT [mg/l] | <2 | <2 |
| Phosphor (P2O5) in CAT [mg/L] | 316 | 351 |
| Kalium (K2O) in CAT [mg/L] | 882 | 916 |
| Magnesium (Mg) in CAT [mg/L] | 99 | 115 |
| Chlorid (Cl⁻) in H₂O [mg/l] | 295 | 306 |
| Sulfat (SO₄) in H₂O [mg/l] | 25 | 25 |
| Natrium (Na) in H₂O [mg/l] | 120 | 121 |

**Tabelle 34: Analyseergebnisse zu Beispielrezeptur 39, Beispielrezeptur 40 und Beispielrezeptur 41**

| | Artikel zur Verwendung im Pflanzenbau gemäß: | | |
|---|---|---|---|
| | Beispielrezeptur 39 | Beispielrezeptur 40 | Beispielrezeptur 41 |
| Trockensubstanz [%] | 52,2 | 58,3 | 47,9 |
| Rohdichte (feucht) [g/L] | 300 | 195 | 285 |
| pH-Wert in CaCl₂ | 4,5 | 6 | 7,2 |
| Salz als KCl in H₂O [g/L] | 3,85 | 1,17 | 1,34 |
| Ammonium-Stickstoff (NH4-N) in CAT [mg/l] | 17 | <2 | <2 |
| Phosphor (P2O5) in CAT [mg/L] | 723 | 237 | 275 |
| Kalium (K2O) in CAT [mg/L] | 839 | 589 | 818 |
| Magnesium (Mg) in CAT [mg/L] | 185 | 88 | 109 |
| Gesamt-Stickstoff (TN) in FS [%] | 0,62 | 0,78 | |
| Gesamt-Stickstoff (TN) in TS [%] | 1,18 | 1,34 | |
| C/N-Verhältnis (TOC/TN) | 29 | | |
| Bor (B) in CAT [mg/L] | 2,5 | 0,94 | |
| Chlorid (Cl⁻) in H₂O [mg/l] | 414 | 357 | 451 |
| Sulfat (SO₄) in H₂O [mg/l] | 88 | 25 | 25 |
| Gesamt organischer Kohlenstoff (TOC) in FS [%] | 18 | | |
| | 34,6 | | |
| Gesamt organischer Kohlenstoff (TOC) in FS [%] | | | |
| Schwefel (S) in CaCl₂ [mg/l] | 31,86 | | |
| Natrium (Na) in H₂O [mg/l] | 114 | 83 | 118 |

**Tabelle 35: Analyseergebnisse zu Beispielrezeptur 42 und Beispielrezeptur 43**

| | Artikel zur Verwendung im Pflanzenbau gemäß: | |
|---|---|---|
| | Beispielrezeptur 42 | Beispielrezeptur 43 |
| Trockensubstanz [%] | 48,5 | 44,7 |
| Rohdichte (feucht) [g/L] | 275 | 295 |
| pH-Wert in CaCl₂ | 6,4 | 7,2 |
| Salz als KCl in H₂O [g/L] | 1,66 | 1,34 |
| Ammonium-Stickstoff (NH4-N) in CAT [mg/l] | <2 | 4 |
| Phosphor (P2O5) in CAT [mg/L] | 348 | 319 |
| Kalium (K2O) in CAT [mg/L] | 942 | 887 |
| Magnesium (Mg) in CAT [mg/L] | 124 | 111 |
| Gesamt-Stickstoff (TN) in FS [%] | 0,67 | 0,67 |
| Gesamt-Stickstoff (TN) in TS [%] | 1,39 | 1,49 |
| C/N-Verhältnis (TOC/TN) | 24 | |
| Bor (B) in CAT [mg/L] | 1,6 | 1,3 |
| Chlorid (Cl⁻) in H₂O [mg/l] | 399 | 387 |
| Sulfat (SO₄) in H₂O [mg/l] | 35 | 25 |
| Gesamt organischer Kohlenstoff (TOC) in FS [%] | 16,4 | |
| Gesamt organischer Kohlenstoff (TOC) in FS [%] | 33,7 | |
| | 12,4 | |
| Schwefel (S) in CaCl₂ [mg/l] | | |
| Natrium (Na) in H₂O [mg/l] | 106 | 100 |

**Tabelle 36: Analyseergebnisse zu Beispielrezeptur 44 und Beispielrezeptur 45**

| | Artikel zur Verwendung im Pflanzenbau gemäß: | |
|---|---|---|
| | Beispielrezeptur 44 | Beispielrezeptur 45 |
| Trockensubstanz [%] | 49,4 | 47,7 |
| Rohdichte (feucht) [g/L] | 310 | 290 |
| pH-Wert in CaCl₂ | 7,1 | 7,1 |
| Salz als KCl in H₂O [g/L] | 1,58 | 1,53 |
| Ammonium-Stickstoff (NH4-N) in CAT [mg/l] | <2 | <2 |
| Phosphor (P2O5) in CAT [mg/L] | 349 | 314 |
| Kalium (K2O) in CAT [mg/L] | 1207 | 916 |
| Magnesium (Mg) in CAT [mg/L] | 132 | 131 |
| Chlorid (Cl⁻) in H₂O [mg/l] | 489 | 449 |
| Sulfat (SO₄) in H₂O [mg/l] | 25 | 25 |
| Natrium (Na) in H₂O [mg/l] | 137 | 129 |

**Tabelle 37: Analyseergebnisse zu Beispielrezeptur 46 und Beispielrezeptur 47**

| | Artikel zur Verwendung im Pflanzenbau gemäß: | |
|---|---|---|
| | Beispielrezeptur 46 | Beispielrezeptur 47 |
| Trockensubstanz [%] | 44,1 | 50 |
| Rohdichte (feucht) [g/L] | 385 | 320 |
| pH-Wert in CaCl₂ | 7,2 | 7,2 |
| Salz als KCl in H₂O [g/L] | 1,76 | 1,68 |
| Ammonium-Stickstoff (NH4-N) in CAT [mg/l] | 5 | <2 |
| Phosphor (P2O5) in CAT [mg/L] | 341 | 317 |
| Kalium (K2O) in CAT [mg/L] | 1518 | 1359 |
| Magnesium (Mg) in CAT [mg/L] | 137 | 123 |
| Chlorid (Cl⁻) in H₂O [mg/l] | 606 | 502 |
| Sulfat (SO₄) in H₂O [mg/l] | 25 | 25 |
| Natrium (Na) in H₂O [mg/l] | 200 | 173 |

**Tabelle 38: Analyseergebnisse zu Beispielrezeptur 48 und Beispielrezeptur 49**

| | Artikel zur Verwendung im Pflanzenbau gemäß: | | |
|---|---|---|---|
| | Beispielrezeptur 48 | Beispielrezeptur 49 | Beispielrezeptur 50 |
| Trockensubstanz [%] | 32,9 | 35,5 | 33,5 |
| Rohdichte (feucht) [g/L] | 675 | 600 | 650 |
| pH-Wert in CaCl₂ | 7,9 | 8,1 | 7,6 |
| Salz als KCl in H₂O [g/L] | 2,24 | 2,55 | 3,28 |
| Ammonium-Stickstoff (NH4-N) in CAT | | | |
| [mg/l] | 11 | <2 | <1 |
| Phosphor (P2O5) in CAT [mg/L] | 266 | 244 | 331 |
| Kalium (K2O) in CAT [mg/L] | 2273 | 2247 | 2616 |
| Magnesium (Mg) in CAT [mg/L] | 229 | 215 | 265 |
| Chlorid (Cl⁻) in H₂O [mg/l] | 542 | 553 | 622 |
| Sulfat (SO₄) in H₂O [mg/l] | 60 | 30 | |
| Natrium (Na) in H₂O [mg/l] | 160 | 159 | 186 |

### Beispiel F - Geruchstests

Die gemäß den obigen Beispielrezepturen Beispielrezeptur 1, Beispielrezeptur 2, Beispielrezeptur 3, Beispielrezeptur 4, Beispielrezeptur 5, Beispielrezeptur 6, Beispielrezeptur 7, Beispielrezeptur 8. Beispielrezeptur 9, Beispielrezeptur 10, Beispielrezeptur 11, Beispielrezeptur 12, Beispielrezeptur 13, Beispielrezeptur 14, Beispielrezeptur 15, Beispielrezeptur 16 und Beispielrezeptur 17 gemäß der Vorgehensweise aus obigem Beispiel C hergestellten Artikel zur Verwendung im Pflanzenbau wurden jeweils einem Geruchstest unterzoogen. Dabei wurden von Beispielrezeptur 3, Beispielrezeptur 5, Beispielrezeptur 7, Beispielrezeptur 8, Beispielrezeptur 9, Beispielrezeptur 11, Beispielrezeptur 12, Beispielrezeptur 13, Beispielrezeptur 15 und Beispielrezeptur 16 jeweils die gemäß obigem Beispiel D hygienisierten Artikel zur Verwendung im Pflanzenbau untersucht.

Die gemäß den obigen Beispielrezepturen Beispielrezeptur 18, Beispielrezeptur 19, Beispielrezeptur 20, Beispielrezeptur 21, Beispielrezeptur 22, Beispielrezeptur 23, Beispielrezeptur 24, Beispielrezeptur 25, Beispielrezeptur 26, Beispielrezeptur 27, Beispielrezeptur 28, Beispielrezeptur 29, Beispielrezeptur 30, Beispielrezeptur 31 und Beispielrezeptur 32 gemäß der Vorgehensweise aus obigem Beispiel C hergestellten Artikel zur Verwendung im Pflanzenbau wurden jeweils einem Geruchstest unterzogen. Dabei wurden von Beispielrezeptur 26, Beispielrezeptur 27, Beispielrezeptur 28, Beispielrezeptur 29, Beispielrezeptur 30, Beispielrezeptur 31, Beispielrezeptur 32, Beispielrezeptur 33, Beispielrezeptur 34, Beispielrezeptur 35, Beispielrezeptur 36, Beispielrezeptur 37, Beispielrezeptur 38, Beispielrezeptur 39, Beispielrezeptur 40, Beispielrezeptur 41, Beispielrezeptur 42, Beispielrezeptur 43, Beispielrezeptur 44, Beispielrezeptur 45, Beispielrezeptur 46, Beispielrezeptur 47, Beispielrezeptur 48. Beispielrezeptur 49 und Beispielrezeptur 50 jeweils die gemäß obigem Beispiel D hygienisierten Artikel zur Verwendung im Pflanzenbau untersucht.

Jeweils wurde eine 100 cm³ große Probe des Artikels zur Verwendung im Pflanzenbau gemäß jeder Beispielrezeptur bei einer Temperatur von 20 °C entnommen und jeweils einem Mitglied eines ungeschulten, aus zehn Personen bestehenden Sensorik-Panels zur Bewertung vorgelegt. Im Blindversuch wurde von sämtlichen Mitgliedern des Sensorik-Panels jeweils der Eigengeruch bei 20 °C bewertet. Der Eigengeruch sämtlicher Proben wurde dabei jeweils deutlich positiver bewertet als der Eigengeruch der vergleichsweise unter identischen Bedingungen bewerteten Stoffe Gärrest, Sauermolke, Pflanzenkohle, Haarmehl, Hornspäne, Hornmehl und Zuckerabfälle jeweils für sich genommen.

Zudem wurde der Eigengeruch sämtlicher Proben dabei jeweils deutlich positiver bewertet als der Eigengeruch der vergleichsweise unter identischen Bedingungen bewerteten Stoffe Sauermolke, Sauermolke nanofiltriert und Viehwageneinstreu (Sägemehl mit Resten von tierischem Kot und Urin). Der Eigengeruch sämtlicher Proben der jeweiligen Artikel zur Verwendung im Pflanzenbau wurde von sämtlichen Mitgliedern des Sensorik-Panels als auf dem Gebiet der vorliegenden Erfindung vorteilhaft bewertet.

## Patentansprüche

1. Verfahren zum Herstellen eines Artikels zur Verwendung im Pflanzenbau, zumindest umfassend die Schritte:
(S1) Herstellen oder bereitstellen einer vordefinierten Menge von vorbehandeltem Laub in einem ersten Behältnis;
(S2) Herstellen oder Bereitstellen, jeweils in einer vordefinierten Menge, von einem, zwei, drei oder mehreren Stoffen als Zuschlagstoffe in zumindest einem zweiten Behältnis;
(S3) kontaktierendes Vermischen von vorbehandeltem Laub mit einem, zwei, drei oder mehreren Stoffen als Zuschlagstoffe, so dass ein Artikel zur Verwendung im Pflanzenbau resultiert.

2. Verfahren nach Anspruch 1, wobei die ein, zwei, drei oder mehrere Stoffe als Zuschlagstoffe ausgewählt sind aus der Gruppe bestehend aus:
- Gärrest,
- Sauermolke, filtriert und/oder unfiltriert
- Viehwageneinstreu, bevorzugt Viehwageneinstreu aus Sägemehl mit Resten von tierischem Kot und/oder Urin, besonders bevorzugt Viehwageneinstreu aus Sägemehl von Nadelhölzern mit Resten von tierischem Kot und/oder Urin,
- Pflanzenkohle,
- Brennnesselsud,
- Tiermehl, bevorzugt Haarmehl, Hornspäne und/oder Hornmehl,
- Kaffeesatz,
- Nadeln von Nadelbäumen, vorzugsweise Tannennadeln,
- Inhalte des tierischen Verdauungssystems, bevorzugt Mageninhalte, Darminhalte und/oder Blaseninhalte, besonders bevorzugt Mageninhalte, ganz besonders bevorzugt Panseninhalte,
- Saftindustrieabfälle, vorzugsweise Schalen von Früchten und/oder ganze Früchte, insbesondere Zitrusfrüchte,
- Zuckerabfälle,
- Getreideschalen und/oder Getreidespelzen sowie
- weitere geeignete Industrieabfälle.

3. Verfahren nach einem der vorstehenden Ansprüche, wobei in Schritt (S1) vorbehandeltes Laub hergestellt wird und die Herstellung des vorbehandelten Laubs zumindest den folgenden Schritt umfasst:
(S1-a) Zerreißen von Laub, vorzugsweise Zerreißen von Laub mit einer Stachelwalze, so dass Laubstücke als Vorbehandeltes Laub resultieren.

4. Verfahren nach einem der vorstehenden Ansprüche, wobei in Schritt (S1) vorbehandeltes Laub hergestellt wird und die Herstellung des vorbehandelten Laubs zumindest den folgenden Schritt umfasst:
(S1-b) Konditionieren von Laub, wobei das Konditionieren das Einstellen der Feuchtigkeit im Laub durch Trocknen und/oder Anfeuchten des Laubs umfasst, so dass konditioniertes Laub resultiert;
und/oder
Konditionieren von Laubstücken als vorbehandeltes Laub, wobei das Konditionieren das Einstellen der Feuchtigkeit in den Laubstücken als Vorbehandeltes Laub durch Trocknen und/oder Anfeuchten der Laubstücke als vorbehandeltes umfasst, so dass konditioniertes vorbehandeltes Laub resultiert;
wobei das Konditionieren von Laub und/oder das Konditionieren von vorbehandeltem Laub in Schritt (S1-b) vorzugsweise so durchgeführt wird, dass Laub und/oder vorbehandeltes Laub mit einem Wasseranteil im Bereich von 5 Gew.-% bis 40 Gew.-% resultiert, bevorzugt mit einem Wasseranteil im Bereich von 6 Gew.-% bis 35 Gew.-%, besonders bevorzugt mit einem Wasseranteil im Bereich von 7 Gew.-% bis 30 Gew.-%, jeweils bezogen auf die Gesamtmasse des konditionierten Laubs bzw. des hergestellten konditionierten vorbehandelten Laubs.

5. Verfahren nach einem der vorstehenden Ansprüche, wobei
- das kontaktierende Vermischen von vorbehandeltem Laub mit einem, zwei, drei oder mehreren Stoffen als Zuschlagstoffe in Schritt (S3) über einen Zeitraum von 2 Minuten bis 30 Minuten, bevorzugt von 3 Minuten bis 10 Minuten, besonders bevorzugt von 4 Minuten bis 7 Minuten durchgeführt wird;
und/oder
- das kontaktierende Vermischen von vorbehandeltem Laub mit einem, zwei, drei oder mehreren Stoffen als Zuschlagstoffe in Schritt (S3) so durchgeführt wird, dass zunächst 15 Gew.-% bis 45 Gew.-%, bevorzugt 20 Gew.-% bis 40 Gew.-%, besonders bevorzugt 25 Gew.-% bis 35 Gew.-%, des hergestellten oder bereitgestellten vorbehandelten Laubs mit 100 Gew.-% der Hergestellten oder bereitgestellten Zuschlagstoffe kontaktierend vorvermischt werden, so dass eine Vormischung aus vorbehandeltem Laub und Zuschlagstoffen resultiert, und diese Vormischung aus vorbehandeltem Laub und Zuschlagstoffen anschließend mit der restlichen Menge des hergestellten oder bereitgestellten vorbehandelten Laubs kontaktierend vermischt wird, so dass ein Artikel zur Verwendung im Pflanzenbau resultiert.

6. Verfahren nach einem der vorstehenden Ansprüche, wobei
- nach dem kontaktierenden Vermischen von vorbehandeltem Laub mit einem, zwei, drei oder mehreren Stoffen als Zuschlagstoffe, so dass ein Artikel zur Verwendung im Pflanzenbau resultiert, in Schritt (S3), ein weiterer Verfahrensschritt (S4) durchgeführt wird, bestehend aus oder umfassend:
- Erwärmen des Artikels zur Verwendung im Pflanzenbau auf eine definierte Temperatur im Bereich von 60 °C bis 90 °C, bevorzugt im Bereich von 68 °C bis 82 °C, besonderes bevorzugt im Bereich von 70°C bis 77 °C;
wobei vorzugsweise
- das Erwärmen des Artikels zur Verwendung im Pflanzenbau auf eine definierte Temperatur im Bereich von 60 °C bis 90 °C, bevorzugt im Bereich von 68 °C bis 82 °C, besonderes bevorzugt im Bereich von 70°C bis 77 °C so durchgeführt wird, dass die Temperatur für einen Zeitraum von 2 Stunden bis 12 Stunden, bevorzugt von 3 Stunden bis 10 Stunden, besonders bevorzugt von 5 Stunden bis 8 Stunden innerhalb des definierten Bereichs gehalten wird, so dass ein veredelter Artikel zur Verwendung im Pflanzenbau resultiert; besonders bevorzugt wird das Erwärmen des Artikels zur Verwendung im Pflanzenbau auf eine definierte Temperatur so durchgeführt, dass ein hygienisierter veredelter Artikel zur Verwendung im Pflanzenbau resultiert.

7. Verfahren nach einem der vorstehenden Ansprüche, wobei
- das Massenverhältnis von hergestelltem oder bereitgestelltem vorbehandelten Laub in Schritt (S1) einerseits und hergestelltem oder bereitgestelltem Zuschlagstoff bzw. hergestellten oder bereitgestellten Zuschlagstoffen in Schritt (S2) andererseits so gewählt ist, dass der in Schritt (S3) beim kontaktierenden Vermischen von vorbehandeltem Laub mit einem, zwei, drei oder mehreren Stoffen als Zuschlagstoffe, resultierende Artikel zur Verwendung im Pflanzenbau einen Wasseranteil im Bereich von 6 Gew.-% bis 50 Gew.-%, bevorzugt im Bereich von 7 Gew.-% bis 40 Gew.-%, besonders bevorzugt im Bereich von 8 Gew.-% bis 35 Gew.-%, ganz besonders bevorzugt im Bereich von 25 Gew.-% bis 30 Gew.-% aufweist;
und/oder
- der resultierende Artikel zur Verwendung im Pflanzenbau, vorzugsweise der getrocknete Artikel zur Verwendung im Pflanzenbau einen pH-Wert im Bereich von pH 3 bis pH 7,5 aufweist, bevorzugt im Bereich von pH 4 bis pH 7, besonders bevorzugt im Bereich von pH 4,5 bis pH 6,8, ganz besonders bevorzugt im Bereich von pH 5 bis pH 6;
und/oder
- der in Schritt (S3) beim kontaktierenden Vermischen von vorbehandeltem Laub mit einem, zwei, drei oder mehreren Stoffen als Zuschlagstoffe, resultierende Artikel zur Verwendung im Pflanzenbau in einem zusätzlichen Verfahrensschritt mit Anteilen von zerkleinertem Gestein vermischt wird.

8. Verfahren nach einem der vorstehenden Ansprüche, wobei das in Schritt (S1) hergestellte oder bereitgestellte vorbehandelte Laub, von Laubbäumen stammt und jahreszeitlich bedingt von den Bäumen gefallen ist;
und/oder
wobei das vorbehandelte Laub in zerkleinerter Form als Laubstücke vorliegt und zumindest 90% der Laubstücke, vorzugsweise zumindest 95% der Laubstücke in keiner Raumrichtung eine Ausdehnung von mehr als 30 mm besitzen, bevorzugt von mehr als 25 mm, besonders bevorzugt von mehr als 20 mm;
und/oder
wobei das vorbehandelte Laub in zerkleinerter Form als Laubstücke vorliegt zumindest 90% der Laubstücke, vorzugsweise zumindest 95% der Laubstücke in zumindest zwei Raumrichtungen eine Ausdehnung von weniger als 5 mm besitzen, bevorzugt von weniger als 4 mm besonders bevorzugt von weniger als 3 mm, ganz besonders bevorzugt von weniger als 1 mm.

9. Verfahren nach einem der vorstehenden Ansprüche, wobei
- beim kontaktierenden Vermischen von vorbehandeltem Laub mit einem, zwei, drei oder mehreren Stoffen als Zuschlagstoffe in Schritt (S3), so dass der Artikel zur Verwendung im Pflanzenbau resultiert, zusätzlich Tierexkremente, vorhanden sind;
und
- die vorhandenen Tierexkremente einen Wasseranteil von mehr als 70 Gew.-%, vorzugsweise von mehr als 90 Gew.-% aufweisen, jeweils bezogen auf die im Verfahren eingesetzte Gesamtmasse an Tierexkrementen.

10. Verfahren nach einem der vorangehenden Ansprüche, wobei
- in zumindest 90 von 100 jeweils 100 cm³ großen, willkürlich aus einer Gesamtmasse von 1 m³ des in Schritt (S3) resultierenden Artikels zur Verwendung im Pflanzenbau ausgewählten Volumenelementen, der Natriumanteil, bestimmt mittels VDLUFA Methodenbuch Band I, A 13.4.3, 2012-01, um nicht mehr als 30 % differiert, bevorzugt um nicht mehr als 20 % differiert, besonders bevorzugt um nicht mehr als 10 % differiert, bezogen auf den Anteil des Natriums im Granulat insgesamt;
und/oder
- in zumindest 90 von 100 jeweils 100 cm³ großen, willkürlich aus einer Gesamtmasse von 1 m³ des in Schritt (S3) resultierenden Artikels zur Verwendung im Pflanzenbau ausgewählten Volumenelementen, der Anteil der Trockensubstanz, bestimmt mittels VDLUFA Methodenbuch Band I, A 2.1.1, 1991-01, um nicht mehr als 30 % differiert, bevorzugt um nicht mehr als 20 % differiert, besonders bevorzugt um nicht mehr als 10 % differiert, bezogen auf den Anteil des Natriums im Granulat insgesamt;
und/oder
- in zumindest 90 von 100 jeweils 100 cm³ großen, willkürlich aus einer Gesamtmasse von 1 m³ des in Schritt (S3) resultierenden Artikels zur Verwendung im Pflanzenbau ausgewählten Volumenelementen, der pH Wert, CaCl₂, bestimmt mittels VDLUFA Methodenbuch Band I, A 5.1.1, 2016-01, um nicht mehr als 30 % differiert, bevorzugt um nicht mehr als 20 % differiert, besonders bevorzugt um nicht mehr als 10 % differiert, bezogen auf den Anteil des Natriums im Granulat insgesamt;
und/oder
- in zumindest 90 von 100 jeweils 100 cm³ großen, willkürlich aus einer Gesamtmasse von 1 m³ des in Schritt (S3) resultierenden Artikels zur Verwendung im Pflanzenbau ausgewählten Volumenelementen, der Nitrat-Stickstoff, NOs-N, in CAT, bestimmt mittels VDLUFA Methodenbuch Band I, A 13.1.1, 2004-01, um nicht mehr als 30 % differiert, bevorzugt um nicht mehr als 20 % differiert, besonders bevorzugt um nicht mehr als 10 % differiert, bezogen auf den Anteil des Natriums im Granulat insgesamt;
und/oder
- in zumindest 90 von 100 jeweils 100 cm³ großen, willkürlich aus einer Gesamtmasse von 1 m³ des in Schritt (S3) resultierenden Artikels zur Verwendung im Pflanzenbau ausgewählten Volumenelementen, der Gesamtanteil an organischem Kohlenstoff, TOC, in der Trockensubstanz, bestimmt mittels VDLUFA Methodenbuch Band I, A 4.1.3.2, 2016-01, um nicht mehr als 30 % differiert, bevorzugt um nicht mehr als 20 % differiert, besonders bevorzugt um nicht mehr als 10 % differiert, bezogen auf den Anteil des Natriums im Granulat insgesamt.

11. Verfahren nach einem der vorstehenden Ansprüche, wobei beim kontaktierenden Vermischen von vorbehandeltem Laub mit einem, zwei, drei oder mehreren Stoffen als Zuschlagstoffe im Schritt (S3), zumindest zwei, drei oder mehrere Stoffen als Zuschlagstoffe zugegen sind und wobei
- als zumindest einer der zwei, drei oder mehreren Stoffe als Zuschlagstoffe Gärrest ausgewählt ist, bevorzugt hygienisierter Gärrest ausgewählt ist und wobei der Massenanteil von vorbehandeltem Laub im Bereich von 20 Gew.-% bis 90 Gew.-% liegt, bevorzugt im Bereich von 40 Gew.-% bis 85 Gew.-% liegt, besonders bevorzugt im Bereich von 45 Gew.-% bis 75 Gew.-%, ganz besonders bevorzugt im Bereich von 48 Gew.-% bis 62 Gew.-% sehr besonders bevorzugt im Bereich von 50 Gew.-% bis 60 Gew.-%.

12. Artikel zur Verwendung im Pflanzenbau, hergestellt in einem Verfahren nach einem der vorstehenden Ansprüche 1 bis 11, vorzugsweise umfassend Anteile von zerkleinertem Gestein, wie zum Beispiel Sande.

13. Verwendung eines Artikels zur Verwendung im Pflanzenbau nach Anspruch 12 im Ackerbau und/oder Gartenbau.

14. Vorbehandeltes Laub, hergestellt in einem Verfahren umfassend Verfahrensschritte der vorstehenden Ansprüche 7 bis 8.

15. Kit zum Herstellen eines Artikels zur Verwendung im Pflanzenbau, vorzugsweise zum Herstellen eines Artikels zur Verwendung im Pflanzenbau gemäß Anspruch 9, besonders bevorzugt zur Herstellung eines Artikels zur Verwendung im Pflanzenbau in einem Verfahren gemäß einem der vorstehenden Ansprüche 1 bis 8, zumindest umfassend:
- als oder in einem ersten Bestandteil des Kits eine Menge von vorbehandeltem Laub;
- als oder in einem zweiten Bestandteil des Kits eine Menge von einem, zwei, drei oder mehreren Stoffen als Zuschlagstoffe, die ausgewählt sind aus der Gruppe bestehend aus:
- Gärrest
- Sauermolke
- Pflanzenkohle
- Tiermehl, bevorzugt Haarmehl, Hornspäne und/oder Hornmehl
- Kaffeesatz
- Nadeln von Nadelbäumen, vorzugsweise Tannennadeln
- Inhalte des tierischen Verdauungssystems, bevorzugt Mageninhalte, Darminhalte und/oder Blaseninhalte, besonders bevorzugt Mageninhalte, ganz besonders bevorzugt Panseninhalte
- Saftindustrieabfälle
- Zuckerabfälle
- Getreideschalen und/oder Getreidespelzen
sowie
- Weitere geeignete Industrieabfälle;
wobei der erste und der zweite Bestandteil des Kits räumlich separat voneinander angeordnet sind.
